# EUROPÄISCHE PATENTANMELDUNG

(11) **EP 4 375 241 A1**
(43) Veröffentlichungstag der Anmeldung: **29.05.2024**
(21) Anmeldenummer: 23204250.7
(22) Anmeldetag: 18.10.2023
(51) Int. Cl.: C02F 3/12, C02F 3/22, B01F 23/23

(54) **WASSERBEHANDLUNGSVORRICHTUNG UND VERFAHREN**

(30) Priorität: 22.11.2022 DE 102022130904
(71) Anmelder: NWT OG, 5020 Salzburg (AT)
(72) Erfinder: Demoulin, Gunnar, 5026 Salzburg (AT)
(74) Vertreter: Charrier Rapp & Liebau

(57) **Zusammenfassung**

Die Erfindung betrifft eine Wasserbehandlungsvorrichtung (1) zur Behandlung von Wasser (W) umfassend einen ersten und einen zweiten durch eine erste Trennwand (2) getrennte Fluidbehälter (R; S), die erste Trennwand (2') an Ihrem oberen Ende eine Überlaufkante (2) ausbildet, so der erste und der zweite Fluidbehälter (R bzw. S) über die Überlaufkante (2) fluidisch miteinander verbunden sind und Wasser (W) von dem ersten Fluidbehälter (S) in den zweiten Fluidbehälter (R) überlaufen kann, wenn ein vorgegebener Füllstand in dem ersten Fluidbehälter (S) überschritten wird, der zweite Fluidbehälter (R) einen schwankenden Füllstand (R3) aufweist, und der erste und zweite Fluidbehälter (R bzw. S) jeweils eine in den Fluidbehälter (R; S) hineinragende Gaszuführung (4R; 4S) mit Gasauslässen (R5; S5) zur Zuführung eines Gases, insb. Luftsauerstoff zur aeroben Aktivierung des Wassers (W), aufweisen, wobei die Gasauslässe (5R; 5S) jeweils einen vertikalen Abstand (R5S; H5S) zu einem jeweiligen Boden (115; 11R) der Fluidbehälter (R; S) aufweisen, wobei die Gaszuführungen (4R; 4S) mit einer gemeinsamen Gasquelle (6) verbunden sind. Bekannte derartige Vorrichtungen sind Wartungs- und Reinigungsintensiv.

Die Aufgabe, eine schnelle, gleichmäßige und möglichst vollständige Durchmischung von Gasen zu erzielen sowie die Vorrichtung leichter reparierbar und reinigbar zu machen, wird dadurch gelöst, dass in dem ersten Fluidbehälter (S) eine nach dem Prinzip einer Mammutpumpe arbeitende Durchmischungsvorrichtung (7) umfassend einen an einem ersten, unteren Ende der Durchmischungsvorrichtung (7) gelegenen Einlauf (9) sowie einen an einem gegenüberliegenden, oberen Ende der Durchmischungsvorrichtung (7) angeordneten Auslauf (10) angeordnet ist, der Gasauslass (5S) der Gaszuführung (4S) des ersten Fluidbehälters (S) zwischen dem Einlauf (9) und dem Auslauf (10) in die Durchmischungsvorrichtung (7) mündet und der vertikale Abstand (H5S) des Gaseinlasses (5S) des ersten Fluidbehälters (S) zu dessen Boden (11S) größer ist als der vertikale Abstand (H5R) des Gasauslasses (5R) der Gaszuführung (4R) des zweiten Fluidbehälters (R) zu dessen Boden (11R), so dass bei gleichem Füllstand (3R = 3S) von dem ersten und dem zweiten Fluidbehälter (R; S) der hydrostatische Druck (a) am Gasauslass (5S) des ersten Fluidbehälters (S) geringer ist als der hydrostatische Druck (b) am Gasauslasses (5R) des zweiten Fluidbehälters (R).

Gegenstand der Erfindung ist auch ein Verfahren zur zyklischen Behandlung von Wasser mit einer entsprechenden Vorrichtung.

## Beschreibung

Die Erfindung betrifft eine Wasserbehandlungsvorrichtung und ein entsprechendes Verfahren.

Wasserbehandlungsvorrichtungen kommen insbesondere zur Aufbereitung von Abwasser, zur Gewinnung von Trinkwasser sowie zur Vor- und/oder Nachbehandlung von wässrigen Lösungen zum Einsatz. Unter Wasserbehandlungsvorrichtungen sind dabei Anlagen zu verstehen, deren Haupteinsatzzweck die Behandlung von Wasser, d.h. Entfernen von unerwünschten Inhaltsstoffen aus dem Wasser und/oder Anreicherung mit gewünschten Zusatzstoffen ist.

Ein in Wasserbehandlungsvorrichtungen vielfach eingesetzter Verfahrensschritt ist dabei das kontrollierte Einbringen von Gasen in das zu behandelnde Wasser zum Einleiten und Beschleunigen eines chemischen, biologischen oder chemobiologischen Prozesses, beispielsweise dem Einbringen von Luftsauerstoff zur Oxidation von im Wasser enthaltenen Inhaltsstoffen oder der Entfernung von gelösten, übersättigten Gasen wie CO₂ oder CH₄. In diesem Zusammenhang ist es u.a. bekannt, über Stabbelüfter, d.h. Lanzen, unter Druck gesetzten Sauerstoff kontrolliert in Wasserbehälter einzubringen.

Eine solche Wasserbehandlungsvorrichtung und ein dazugehöriges Sequence-Batch-Reactor-Verfahren zeigt die US-amerikanische Offenlegungsschrift US 4 663 044 A. Darin gezeigt wird insbesondere das Einblasen von Luftsauerstoff in unterschiedliche (Ab-)Wasserbehälter A, B, C über ein bodennah angebrachtes Luftverteilersystem mit mehreren Auslässen 114, 122, 132, die über eine Luftzuführeinrichtung 112 mit Druckluft versorgt werden, wobei die (Ab)Wasserbehälter mit Wasser gefüllt sind, das sich in unterschiedlichen Behandlungsphasen befindet. Nachteilig an derartigen Wasserbehandlungssystemen ist, dass die in die einzelnen Behälter zugeführte Druckluft nicht regelbar ist, wenngleich dies aufgrund unterschiedlicher Behandlungsphasen des Abwassers grundsätzlich wünschenswert wäre. Eine entsprechende Regelungseinrichtung mit steuerbaren Regelventilen in der bzw. den Zuführleitungen wäre jedoch mit hohen Kosten verbunden. Wünschenswert ist es ferner, eingebrachte Gase gleichmäßig und möglichst homogen mit dem Wasser zu vermischen und in dem jeweiligen Wasserbehälter zu verteilen, um gewünschte Folgeprozesse zu initiieren bzw. zu beschleunigen. Zum Teil werden zu diesem Behuf mechanische Rührwerke und/oder eine Vielzahl von über den Wasserbehälter verteilte Gasauslässe eingesetzt. Mechanische Rührwerke sind jedoch kostenintensiv, fehleranfällig und nicht für jede Wasserbehältergeometrie geeignet. Eine Vielzahl von Gasauslässen ist aufgrund der vielen, zusätzlich notwendigen Leitungen materialintensiv. Beide Lösungen sind außerdem wartungs- und reinigungsintensiv.

Vor diesem Hintergrund ist es eine Aufgabe der Erfindung, zumindest einige Nachteile aus dem Stand der Technik zu überwinden und eine Wasserbehandlungsvorrichtung anzugeben, mit dem einerseits eine schnelle, gleichmäßige und möglichst vollständige Durchmischung von in das Wasser eingebrachten Gasen möglich ist. Anderseits soll die Gaseinbringung unter möglichst geringem Energieaufwand erfolgen, da eine Gaseinbringung unter Druck einer der wesentlichen Energiekostentreiber in einer Wasserbehandlungsvorrichtung ist. Schließlich soll es auch möglich sein, die Gaseinbringung in unterschiedliche Wasserbehälter geregelt, jedoch ohne Regelaufwand zu bewerkstelligen.

Diese Aufgabe wird gelöst durch eine Wasserbehandlungsvorrichtung nach Anspruch 1. Die erfindungsgemäße Wasserbehandlungsvorrichtung zur Wasserbehandlung, insb. zur biologischen Behandlung und Aufbereitung von Abwässern mittels Belebtschlamm, umfasst wenigstens zwei fluidisch miteinander verbundene Fluidbehälter, nämlich einen ersten und einen zweiten Fluidbehälter, zwischen denen kontinuierlich oder diskontinuierlich (batchweise) Wasser ausgetauscht und transferiert werden kann. Der Wassertausch erfolgt dabei über eine zwischen den Fluidbehältern angeordneten Überlaufkante, so dass Wasser ab einem vorgegebenen Füllstand von dem ersten Fluidbehälter in den zweiten Fluidbehälter überläuft. Die Überlaufkante wird dabei durch die Oberkante einer zwischen dem ersten und dem zweiten Fluidbehälter angeordneten Trennwand gebildet. Der Wasserfluss erfolgt im Wesentlichen also unidirektional von dem ersten in den zweiten Fluidbehälter, wobei der zweite Fluidbehälter mit zu behandelndem Wasser beschickt und das behandelte Wasser aus dem zweiten Fluidbehälter abgezogen werden kann.

Der erste und der zweite Fluidbehälter weisen eine entsprechende erste bzw. zweite Gaszuführung mit einem oder mehreren ersten bzw. zweiten Gasauslässen, bspw. in Form von in die Fluidbehälter eingetauchten ersten bzw. zweiten Gaslanzen, auf, die aus einer gemeinsamen Gasquelle mit einem unter Druck stehenden Gas (Druckgas) versorgt werden und über die das Druckgas in die Fluidbehälter eingetragen wird. Die Gasauslässe sind auf einer bestimmten, vertikalen Höhe gegenüber den jeweiligen Fluidbehälterböden angeordnet.

Bei dem Druckgas kann es sich um Druckluft, d.h. atmosphärisch gewonnene und komprimierte Umgebungsluft, handeln. Es kann sich jedoch auch um ein anderes Gas, insb. prozesstechnisch gewonnenes Industriegas wie CO₂, O₂ oder N₂, handeln.

Die Wasserbehandlungsvorrichtung zeichnet sich dadurch aus, dass der erste Fluidbehälter eine Durchmischungsvorrichtung umfasst, die nach dem Prinzip einer Mammutpumpe arbeitet. Mammutpumpen sind im Englischen auch unter dem Begriff ,Airlift` bekannt. Die Durchmischungsrichtung erstreckt sich - wie jede Mammutpumpe - im Wesentlichen vertikal längs einer Längsachse und weist ein erstes und ein zweites Ende auf, wobei am ersten (vertikal unteren) Ende ein Einlauf mit einer Einlauföffnung und am zweiten (vertikal oberen) Ende ein Auslauf mit einer Auslauföffnung angeordnet ist und sich zwischen dem Ein- und dem Auslauf ein Strömungskanal mit einer Wandung erstreckt, der den Einlauf mit dem Auslauf fluidisch verbindet. Bei dem Strömungskanal kann es sich um ein Rohr, oder auch ein röhrenförmiges, vorzugsweise rotationssymmetrisches Gebilde handeln. Andere Formen und Ausbildungen des Strömungskanals sind möglich.

Zwischen dem Ein- und dem Auslauf ist der Gasauslass des ersten Fluidbehälters in den Strömungskanal der Durchmischungsvorrichtung weisend angeordnet.

Die Wasserbehandlungsvorrichtung zeichnet sich ferner dadurch aus, dass der vertikale Abstand der Gaszuführung des ersten Fluidbehälters zu dessen Boden größer ist als der vertikale Abstand des Gasauslasses der Gaszuführung des zweiten Fluidbehälters zu dessen Boden, so dass bei gleichem Füllstand von dem ersten und zweiten Fluidbehälter der hydrostatische Druck am Gasauslass des ersten Fluidbehälters geringer ist als der hydrostatische Druck am Gasauslass des zweiten Fluidbehälters. Dadurch wird gewährleistet, dass für jeden beliebigen Füllstand des ersten Fluidbehälters, der größer oder gleich dem Füllstand des zweiten Fluidbehälters ist, eine Gaszuführung in den ersten Fluidbehälter gewährleistet ist. Füllstand ist dabei volumenunabhängig zu verstehen im Sinne einer Füllhöhe oder eines Pegelstandes des Fluidbehälters, nicht jedoch im Sinne eines Füllvolumens.

In anderen Worten kommt es erfindungsgemäß nur darauf an, dass sich über dem Gasauslass des ersten Fluidbehälters stets eine kleinere oder maximal gleich hohe Wassersäule wie über dem Gasauslass des zweiten Fluidbehälters befindet - also ein geringerer hydrostatischer Druck wirkt -, so dass bei jedem Füllstandsverhältnis der Füllstände von ersten und zweitem Fluidbehälter Reaktor eine (Mindest-)Gaszuführung in den ersten Fluidbehälter gewährleistet ist.

Diese Anordnung birgt u.a. den Vorteil, dass das in den Fluidbehältern befindliche Wasser, welches sich in unterschiedlichen Behandlungsstufen befinden kann, mit unterschiedlichen Gasmengen aus derselben Gasquelle beaufschlagt werden kann, ohne dass zur Verteilung und Einstellung der Gasmenge bzw. der Gasmengenverhältnisse, die aus dem ersten bzw. zweiten Gasauslass strömen bzw. strömen sollen, eine Druckminderung (Ventile, Sperrklappen) vonnöten ist. Hierdurch kann der Gesamtbedarf an Druckluft reduziert und damit Energiekosten eingespart werden.

Vorteilhafte Merkmale und weitere Ausgestaltungen der Erfindung ergeben sich aus den Unteransprüchen und der nachfolgenden Beschreibung.

In einer zweckmäßigen Variante kann die Wasserbehandlungsvorrichtung in unterschiedlichen Phasen betrieben werden, nämlich einer Beschickungsphase (Befüllungsphase), einer Gaszuführungsphase, einer Sedimentationsphase sowie einer Abzugsphase (Dekantierphase). Die einzelnen Phasen können zeitlich hintereinander durchgeführt werden. Die Beschickungsphase kann jedoch auch gleichzeitig oder zumindest teilweise überlappend mit der Gaszuführungsphase und auch allen anderen Phasen durchgeführt werden. Alternativ oder zusätzlich können einzelne Phasen jedoch auch örtlich statt zeitlich voneinander getrennt sein.

In der Beschickungsphase wird der erste Fluidbehälter mit zu behandelndem Wasser beschickt, d.h. befüllt. Über die Überlaufkante läuft das im ersten Fluidbehälter ggfs. bereits teilweise oder vollständig vorbehandelte Wasser dann in den zweiten Fluidbehälter über. In der Gaszuführungsphase wird dem in dem ersten und zweiten Fluidbehälter befindlichen Wasser über die Gasauslässe Gas, insb. komprimierte Umgebungsluft, zugeführt. Die Gaszuführung kann sich zeitlich vollständig oder zumindest teilweise mit der Beschickungsphase überdecken. Ferner sorgt die Positionierung des ersten Gasauslasses, der in die Durchmischungsvorrichtung mündet, für einen Sog in die Durchmischungsvorrichtung, so dass einlaufnahes Wasser in dem ersten Fluidbehälter über die Einlauföffnung eingesogen, mit dem eingebrachten Gas vermischt und über die Auslauföffnung der Durchmischungsvorrichtung wieder in den ersten Fluidbehälter rückgespeist wird. Hierdurch wird neben einer guten Durchmischung des Wassers mit dem Gas auch eine gute Durchmischung unterschiedlicher Wasserschichten und ggfs. auch von Wasser mit etwaigen am Boden des Fluidbehälters lagernden Sedimenten, wie etwa Biomasse oder Belebtschlamm, erreicht. In der Sedimentationsphase wird die Luftzuführung und ggfs. die noch andauernde Beschickung mit Wasser unterbrochen, so dass im Wasser befindliche Partikelagglomerationen, die schwerer sind als Wasser, in dem ersten bzw. zweiten Fluidbehälter zu Boden sinken können (sedimentieren) und dort eine mit der Zeit anwachsende und dicker (höher) werdende Sedimentschicht bilden. In der Abzugsphase wird schließlich über eine Abzugsvorrichtung im Wesentlichen partikelagglomerationsfreies oder zumindest partikelagglomerationsarmes Wasser aus den oberflächennahen, höchstgelegenen Wasserschichten, d.h. aus den von der Sedimentationsschicht am weitesten entfernten Schichten, über eine Abzugsvorrichtung aus dem zweiten Fluidbehälter abgezogen (dekantiert). Während der Abzugsphase sinkt der Pegelstand in dem zweiten Behälter. Die Summe dieser vier Phasen (Beschickung, Gaszuführung, Sedimentation, Abzug) bildet einen Zyklus. Das abgezogene Wasser bildet das Endprodukt und kann weiteren Nachbehandlungsschritten unterzogen werden.

In einer konkreten Ausführungsform kann es sich bei der Wasserbehandlungsvorrichtung um eine Abwasserbehandlungsvorrichtung zur Behandlung von Abwasser, bspw. Haushalts-, Regen- oder auch Industrieabwässern, handeln, bei der das zu behandelnde Abwasser von Schadstoffen und Verunreinigungen gereinigt werden soll. Typischerweise gelangt das Abwasser nach mechanischen Vorbehandlungsstufen, in denen zumindest grobe Verunreinigungen und Schmutzpartikel (Treibgut, Fremdkörper, Sand und Geröll, etc.) über Rechen und Sandfänge herausgefiltert werden, in der Beschickungsphase in den ersten Fluidbehälter, wobei der Pegelstand beim ersten Befüllen beständig steigt, bis der Pegelstand die Überlaufkante zwischen dem ersten und dem zweiten Fluidbehälter erreicht und anschließend, d.h. bei Überschreiten der Höhe der Überlaufkante, in den zweiten Fluidbehälter überläuft. Die Beschickung (Befüllung) des Abwassers in den ersten Fluidbehälter kann dabei kontinuierlich oder auch stoßweise erfolgen, so dass auch die Zuführung des Abwassers von dem ersten in den zweiten Fluidbehälter über die Überlaufkante kontinuierlich oder stoßweise erfolgt.

Während der Belüftungsphase wird das Abwasser über die Gasauslässe sowohl im ersten als auch im zweiten Fluidbehälter mit einem Gas, insb. Druckluft, d.h. unter Druck gesetzter Umgebungsluft, beaufschlagt. Hierdurch können Oxidationsprozesse, insbesondere die Umwandlung von Kohlenstoffverbindungen in Kohlendioxid und Wasser oder die Umsetzung von Ammonium zu Nitrat (Nitrifikation) beschleunigt werden. Die Oxidationsprozesse können dabei von Mikroorganismen unterstützt werden, die sich in den Fluidbehältern anreichern, Verunreinigungen verstoffwechseln und in Partikelagglomerationen binden. Diese aus Verunreinigungen, Stoffwechselprodukten und Mikroorganismen bestehende Partikelagglomerationen bilden sog. Belebtschlamm, der insb. in der nachfolgenden Sedimentationsphase zu Boden sinkt und die beständig wachsende Sedimentationsschicht bildet. Wie bereits oben dargestellt, gewährleistet die Gaszuführung über die Durchmischungsvorrichtung eine exzellente Vermischung von unterschiedlichen Wasserschichten, insb. von altem Wasser sowie während der Beschickung neu hinzukommendem Wasser, der Verteilung von Belebtschlamm sowie einer homogenen Verteilung der eingebrachten Luft in dem ersten Fluidbehälter. Ein separates Rührwerk für die Durchmischung ist nicht erforderlich. Auch eine separate Gasverteilungsvorrichtung wie bspw. ein aktiver Druckminder oder ein Druckregelventil ist nicht erforderlich, da - vorausgesetzt, es handelt sich um einen bekannten Prozess mit bekannten Prozessparametern - das Abwasser in dem ersten Fluidbehälter bei einer bekannten, durchschnittlichen Aufenthaltsdauer einen bekannten Gasbedarf für gewünschte Durchmischungs- und/oder Oxidationsprozesse hat, der in einem näherungsweise festen Verhältnis zum Gasbedarf im zweiten Fluidbehälter steht, so dass die in den ersten und den zweiten Fluidbehälter einzubringendes Gas einem näherungsweise konstanten Verhältnis unterworfen ist, bspw. einem Verhältnis von 30:70. Dieses gewünschte Verhältnis kann technisch über die unterschiedliche, hydrostatische Höhe der Gasauslässe in dem ersten bzw. zweiten Fluidbehälter abgebildet bzw. zumindest angenähert werden. Unter "hydrostatischer Höhe" ist dabei der vertikale Abstand der Gasauslässe von dem Pegelstand der Fluidbehälter zu verstehen, wenn beide Fluidbehälter dieselbe Wasserlinie aufweisen. Ein geringfügiges Abweichen der Drucklufteintragung infolge des schwankenden (nach der Abzugsphase wieder ansteigenden) Füllstands in dem zweiten Fluidbehälter tut dem, insb. da dies zeitlich auf die Dauer der Beschickungsphase beschränkt ist, keinen Abbruch.

Vorteilhaft kann es für die Wasserbehandlungsvorrichtung - und speziell für die o.g. Abwasserbehandlungsvorrichtung - auch sein, das Verhältnis der Gaszuführung in den ersten bzw. zweiten Fluidbehälter nicht ausschließlich über die hydrostatische Höhe der Gasauslässe, sondern zusätzlich auch über Rohrleitungsquerschnitte der zu den Gasauslässen führenden Gaszuführungen (permanent) einzustellen. Zweckmäßig ist es bspw., wenn ein maximaler Rohrleitungsquerschnitt der Gaszuführung in den ersten Fluidbehälter um einen Faktor von 2, 3 oder 5 kleiner ausgeführt ist als ein maximaler Rohrleitungsquerschnitt der Gaszuführung in den zweiten Fluidbehälter. Hierdurch ist eine weitergehende Justierung der Gaszuführmengen möglich, da die Einstellung von Gaszuführmengen über Leitungsquerschnitte und über die hydrostatische Höhe jeweils anderen physikalischen Gesetzmäßigkeiten unterliegen. Hierdurch kann insb. auch bei stark divergierenden Füllständen zwischen ersten und zweitem Fluidbehälter stets eine minimale Gaszuführung in den ersten sowie zweiten Fluidbehälter gewährleistet werden.

Die Möglichkeit, die hydrostatische Höhe der Gaszufuhr durch unterschiedliche Positionierung des Gasauslasses zu variieren oder anzupassen, bleibt unbenommen. Die hydrostatische Höhe der Gaszufuhr ist also nicht notwendigerweise starr, sondern kann an die Gegebenheiten angepasst werden, beispielsweise, indem eine Vielzahl von auf unterschiedlichen Höhen befindlichen Blindanschlüssen an der Vorrichtung vorgesehen werden, von denen nur einer mit der Gasquelle verbunden wird/ist. Der hier verwendete Begriff der Anpassung meint vorliegend die Anpassung der hydrostatischen Höhe bei Installation und/oder Wartung der Vorrichtung, nicht jedoch im laufenden Betrieb der Vorrichtung. Eine adaptive Anpassung der hydrostatischen Höhe des Gasauslasses im laufenden Betrieb - etwa durch elektromotorische, hydraulische oder pneumatische Antriebsmittel - ist jedoch möglich.

In einer besonders zweckmäßigen Ausführung der Erfindung kann auf jedwede aktiven Druckregelelemente zur Verteilung der dem ersten und dem zweiten Fluidbehälter zugeführten Gasmengen vollständig verzichtet werden. Dabei wird vorausgesetzt, dass der erste und der zweite Gasauslass aus derselben Gasquelle versorgt werden, d.h. die Gasquelle eine Zuführleitung aufweist, von der die zu dem ersten bzw. zweiten Gasauslass führenden Gaszuführungen abzweigen, ohne dass in diesen Gaszuführungen Drosselventile oder andere aktive Stellelemente (wie Volumenregler oder Druckregler) angeordnet sind, die während des Betriebs der Wasserbehandlungsvorrichtung verstellbar sind. Absperrventile, welche einen dauerhaften Verschluss einer Gaszuführung z.B. für Wartungszwecke ermöglichen, sind nicht als aktives Stellelement im vorgenannten Sinne zu verstehen.

Die Durchmischungsvorrichtung weist zweckmäßig eine bestimmte Positionierung und bestimmte Abmessungen auf:
Die Durchmischungsvorrichtung ist vertikal in dem ersten Fluidbehälter angeordnet, so dass der Strömungskanal der Durchmischungsvorrichtung sich im Wesentlichen vertikal erstreckt und in einer Strömungsrichtung von unten nach oben durchströmt wird.

Die Durchmischungsvorrichtung ist zweckmäßig unterhalb des Flüssigkeitsspiegels angeordnet, befindet sich also unter Wasser'. Hierdurch können insb. Emissionen und Immissionen von Luft und Lärm reduziert werden. Besonders bevorzugt befindet sich die Durchmischungsvorrichtung wenigstens 100cm unterhalb des Flüssigkeitsspiegels des ersten Fluidbehälters. Hierdurch können insb. mittlere Wasserschichten mit dem Gas sowie vom Boden angesaugten Ablagerungen (Belebtschlamm) durchmischt werden. Dies kann Umsetzungsraten (Oxidationsprozesse) beschleunigen, da oberflächennahe Wasserschichten ohnehin auf natürliche Art und Weise mit der Umgebungsluft in Kontakt stehen und deshalb bereits mit Sauerstoff gesättigt ist, so dass durch eine hinreichend tiefe Positionierung der Durchmischungsvorrichtung unter Wasser die Gesamtmenge an im Wasser verfügbarem Sauerstoff erhöht werden kann.

Die Durchmischungsvorrichtung weist vorteilhaft eine Gesamtlänge auf, die zwischen 30 und 80%, bevorzugt zwischen 60 und 70% der Gesamthöhe des ersten Fluidbehälters beträgt. Über eine so ausgewählte Länge kann gewährleistet werden, dass eine nahezu vollständige Durchmischung aller Wasserschichten, insb. der unteren mit den weiter oben gelegenen Wasserschichten, erfolgt. Unter Gesamtlänge ist dabei der Abstand zwischen dem (unteren) Einlauf und dem (oberen) Auslauf zu verstehen.

Vorzugswürdig kann es sein, die Durchmischungsvorrichtung bodennah anzuordnen, insb. so, dass die Einlauföffnung der Durchmischungsvorrichtung sich in Bodennähe des Bodens des ersten Fluidbehälters, bevorzugt in einem Abstand zwischen 5 und 50cm, befindet. Ein so gewählter Abstand gewährleistet einerseits einen ausreichenden Abstand zu einer sich am Boden ablagernden Sedimentschicht, so dass der Einlauf zu keinem Zeitpunkt durch die Sedimente blockiert oder verstopft wird, anderseits, dass die Sedimentschicht während der Gaszuführungsphase aufgewirbelt, angesogen und durch den Strömungskanal der Durchmischungsvorrichtung in höhere Wasserschichten transportiert werden kann.

Vorteilhaft ist es, wenn der Gasauslass des zweiten Fluidbehälters sich ebenfalls in Bodennähe, hier des Bodens des zweiten Fluidbehälters, befindet. Zweckmäßig ist der zweite Gasauslass dabei bodennah in einem Abstand von nicht mehr als 30cm zum Boden des zweiten Fluidbehälters angeordnet. Der zweite Gasauslass ist dabei vorzugsweise - anders als der in die Durchmischungsvorrichtung mündende Gasauslass des ersten Fluidbehälters als fein perforierte, multiple Auslassöffnung ausgebildet. Die fein perforierte, multiple Auslassöffnung kann teller- oder scheibenförmig, balkenförmig oder röhrenförmig ausgebildet sein. Sie kann auch in eine Vielzahl von jeweils teller-, röhren- oder balkenförmigen Gruppierungen oder Stränge gegliedert sein. Es ist möglich, dass die Gasauslässe aus feinporösen Materialien, etwa aus perforiertem Kunststoff oder porösen, mineralischen Stoffen gebildet sind oder diese umfassen, die das ausströmende Gas in kleine Gasblasen zerteilen.

In einer vorteilhaften Weiterentwicklung sind die Böden des ersten und zweiten Fluidbehälters im Wesentlichen auf derselben geodätischen Höhe angeordnet und vorzugsweise flach, d.h. eben, ausgebildet. Dies reduziert die Baukosten für eine Wasseraufbereitungsanlage.

Um Kurzschlussströme zu vermeiden oder zumindest zu verringern, kann die Wasserbehandlungsvorrichtung vorteilhaft eine Überlaufkante mit einem variablen Höhenprofil, d.h. einer höhenveränderlichen Überlaufkante, aufweisen.

Variabel kann bedeuten, dass das Profil der Überlaufkante verstellbar ist, bspw. durch motorisch verfahrbare Wandelemente. Variabel umfasst jedoch auch feststehende, unveränderliche Überlaufkanten mit nicht-konstanter Höhe. Vorzugsweise ist unter variablem Höhenprofil ein unveränderliches Höhenprofil zu verstehen.

Unter Kurzschlussstrom sind insb. Fluidströmungen zu verstehen, die unter Auslassung eines eigentlich vorgesehenen Behandlungsschrittes direkt von einer Einlaufstelle zu einem Ablauf strömen.

Ein variables Höhenprofil bildet beispielsweise eine Überlaufkante, die nicht horizontal, sondern schräg gegenüber einer Horizontalen verläuft. Durch ein variables Höhenprofil ist eine Zuströmung nicht mehr konstant über die gesamte Länge der Überlaufkante, sondern verändert sich in Abhängigkeit des aktuellen Pegelstands. Daraus resultierende Zulaufströmungen weisen daher veränderliche Richtungs- und Geschwindigkeitsvektoren auf. Dies kann genutzt werden, um die Ausbreitung von Zulaufströmungen in ein Becken oder Fluidbehälter gezielt zu steuern.

In einer möglichen und vorteilhaften Ausführungsvariante mit variablem Höhenprofil kann der zweite Fluidbehälter der vorbeschriebenen Wasserbehandlungsvorrichtung eine zweite Trennwand aufweisen, die den zweiten Fluidbehälter in einen ersten und einen zweiten Teil teilt. Die Oberkante der zweiten Trennwand bildet eine zweite Überlaufkante, so dass der erste und der zweite Teil fluidisch miteinander in Verbindung stehen. Die zweite Überlaufkante weist dabei ein variables Höhenprofil, insb. mit einem geneigten Abschnitt, auf.

Die erste Überlaufkante in dem ersten Fluidbehälter kann ebenfalls ein geneigtes Höhenprofil aufweisen, verläuft vorzugsweise jedoch geradlinig, d.h. horizontal.

Durch die Zweiteilung des zweiten Fluidbehälters mit einer höhenvariablen Überlaufkante kann die Ausbreitungsgeschwindigkeit von über die Überlaufkante frisch zuströmendem Wasser in eine Richtung weg von der Überlaufkante stark reduziert werden. Dies ist nützlich, wenn in dieser Richtung eine Abzugsvorrichtung angeordnet ist, die möglichst nicht bzw. nicht unmittelbar mit dem frisch zuströmenden Wasser in Kontakt kommen soll.

Um die Ausbreitungsrichtung und -geschwindigkeit von frisch zuströmendem Wasser weiter zu kontrollieren, kann es vorteilhaft sein, den Wasserfluss möglichst stark umzulenken. Dies kann einfach dadurch umgesetzt werden, dass die erste und die zweite Überlaufkante, und typischerweise auch die erste und die zweite Trennwand, senkrecht zueinander angeordnet sind, so dass Wasser zunächst in einer ersten Richtung über die erste Überlaufkante strömt und dann in einer zweiten Richtung über die zweite Überlaufkante strömt, wobei die zweite Richtung im Wesentlichen senkrecht zu der ersten ausgerichtet ist.

Eine Überlaufkante mit variablem Höhenprofil kann als eigenständiger Erfindungsgedanke angesehen werden. Sie ist nicht notwendigerweise von der Kombination mit einer Gaszuführung abhängig.

Die vorgenannte Durchmischungsvorrichtung ist zweckmäßig für eine Verwendung in der vorbeschriebenen Wasserbehandlungsvorrichtung ausgebildet. Mögliche und vorteilhafte Ausbildungen der Durchmischungsvorrichtung, insb. im Hinblick auf niedrige Herstellungs-, Installations- und Betriebskosten, werden nachfolgend erläutert.

Die Durchmischungsvorrichtung dient dem Zweck, ein flüssiges Fluid in einem Fluidbehälter von einem ersten Niveau auf ein zweites Niveau anzuheben und hierdurch das Fluid umzuwälzen. Da die Durchmischungsvorrichtung nach dem Prinzip einer Mammutpumpe arbeitet, d.h. der Durchmischungsvorrichtung im Betrieb ein Gas zugeführt wird, kann das Fluid mit diesem Gas angereichert werden. Wenn keine Wechselwirkung zwischen dem Gas und dem Fluid gewünscht ist, kann die Funktion des Gases jedoch auch vollständig auf die Funktion des Umwälzens reduziert sein. Je nach Einsatzzweck eigenen sich daher gegenüber dem Fluid oder seinen Bestandteilen (insb. Verunreinigungen oder Beimischungen) inert wirkende oder eben reaktionsfreudige Gase. Bei geeigneter Platzierung können über den Einlauf neben dem Fluid natürlich auch weitere Fremdstoffe, etwa Sedimente, angesaugt und mit dem Fluid durchmischt werden. Hierdurch kann ggfs. auch eine gewünschte Änderung der Dichteeigenschaften des Fluids erzielt werden.

Die Durchmischungsvorrichtung ist so aufgebaut, dass sie einen sich entlang einer Längsachse erstreckenden, hohlleiterartigen Grundkörper mit einem oberen und einem unteren Ende umfasst, wobei am unteren Ende ein Einlauf und am oberen Ende ein Auslauf angeordnet sind. Der hohlleiterartige Grundkörper, genauer gesagt dessen Wandung, bildet einen Strömungskanal zwischen dem Einlauf und dem Auslauf aus. Der Einlauf weist eine Einlauföffnung auf, über die Fluid am unteren Ende eingesaugt werden kann, während der Auslauf eine Auslauföffnung aufweist, über die das am Einlauf angesaugte und durch den Strömungskanal geförderte Fluid ausgegeben wird. Zwischen dem Ein- und dem Auslauf befindet sich ein Gasauslass zum Einblasen (Zuführen) eines Gases. Das Gas wird dabei unter Druck eingeblasen, welcher zumindest so hoch oder höher ist, wie der durch die über dem Gasauslass stehende Fluidsäule erzeugte hydrostatische Druck ist. Andernfalls wäre eine Gaszuführung nicht möglich. Indem das eingeblasene Gas in dem Strömungskanal nach oben steigt, erzeugt es einen (Nach)Saugeffekt am Einlauf, so dass Fluid am Einlauf eingesaugt wird.

Um den Sogbereich am Einlauf zu vergrößern, ist der Einlauf trichterartig vergrößert, so dass sich der Einlauf mit der Einlauföffnung am unteren Ende eines trichterförmigen Abschnitts (synonym: Einlaufbereich) befindet. Der trichterförmige Einlaufbereich geht weiter oben dann in einen röhrenförmigen Abschnitt über.

Die Durchmischungsvorrichtung ist so gestaltet, dass der Grundkörper im Wesentlichen zweiteilig aus dem trichterförmigen Einlaufbereich sowie dem röhrenförmigen Abschnitt ausgebildet ist, wobei es sich bei dem trichterförmigen Einlaufbereich und dem röhrenförmigen Abschnitt jeweils um eigenständige Bauteile handelt, die zur Bildung des Grundkörpers der Durchmischungsvorrichtung miteinander verbunden sind.

Die lösbare Verbindung kann beispielsweise als unmittelbare Verbindung - etwa als eine Steckverbindung (Fügung beide Bauteile unter leichtem Untermaß/Presspassung), als Schnappverbindung (elastisch auslenkbare sich in Öffnung des Fügepartners erstreckende Schnappelemente) oder als Schraubverbindung (etwa mit umlaufendem Gewinde und Gegengewinde an dem unteren Ende des röhrenförmigen Abschnitts bzw. an dem oberen Ende des trichterförmigen Einlaufbereichs) oder als mittelbare Verbindung - d.h. unter Zuhilfenahme von Verbindungselementen wie Stiften oder Schrauben - ausgebildet sein. Möglich sind auch nicht-lösbare Verbindungen wie bspw. durch Einsatz von Klebstoff oder gleichwirkenden Haftvermittlern, Schweißverbindungen und ähnlichem.

Durch eine zweiteilige Ausführung können die Bauteile der Durchmischungsvorrichtung unabhängig voneinander gefertigt werden, sie sind unabhängig voneinander transportierbar und können vor Ort und mit geringem Aufwand zu einer einsatzbereiten Durchmischungsvorrichtung gefügt und installiert werden.

Anbau- und Befestigungsteile, wie etwa Befestigungsanker, Verspannungsdrähte oder Zuführteile der Gaszuführung und andere Hilfsmittel sind nicht als Teile im Sinne des Begriffs "zweiteilig" zu fassen.

In einer weiter verbesserten Ausführung kann der röhrenförmige Abschnitt kegelförmig, d.h. mit einem Kegelabschnitt mit einer schräg zulaufenden Mantelfläche, ausgeführt sein. Hierdurch lassen sich röhrenförmige Abschnitte auf platzsparende Weise ineinander stapeln. Kegelförmig ist hierbei nicht streng mathematisch, sondern funktionell zu verstehen, so dass auch andere im mathematischen Sinne nicht kegelförmige Abschnitte, bspw. pyramidenförmig ausgestaltete Abschnitte, die aufgrund dieser Formgebung stapelbar sind, unter den Begriff, kegelförmig' im Sinne der Erfindung fallen sollen.

Bevorzugt weist der kegelförmige, röhrenförmige Abschnitt, d.h. dessen Wandung, dabei eine Neigung zwischen 1: 0,005 und 1:0,05 gegenüber der Vertikalen auf. Der Öffnungswinkel des kegelförmigen Abschnitts bewegt sich also in der Größenordnung von unter 5°.

Der trichterförmige Einlaufbereich kann vorteilhaft verrundet, d.h. kantenfrei, ausgeführt sein, beispielsweise mit hyperbolischer oder parabolischer Kontur. Hierdurch lassen sich Strömungsreibungen minimieren. Besonders bevorzugt ist der Einlaufbereich an seinem (unteren) Ende geneigt unter einem Winkel von maximal 45° oder weniger gegenüber der Vertikalen. Dies gewährleistet einen guten Kompromiss zwischen vertikaler und horizontaler Sogwirkung, so dass auch ein gutes Mischungsverhältnis von angesaugtem Fluid zu angesaugten Sedimenten erzielbar ist. Dies reduziert zugleich auch die Gefahr einer Verstopfung.

In zweckmäßiger Weise sind der Einlauf und der Auslauf aufeinander abgestimmt, und zwar so, dass die Einlauföffnung einen Öffnungsquerschnitt aufweist, der zweimal so groß ist wie der Öffnungsquerschnitt des Auslaufs. In anderen Worten ist es also vorteilhaft, wenn die Einlauföffnung wenigstens viermal die Fläche aufweist wie der Auslauf. Hierdurch können Änderungen in der Strömungsgeschwindigkeit, die durch die Querschnittsverengung vom Einlauf zum Auslauf eintreten, vorteilhaft begrenzt werden.

Strömungstechnisch vorteilhaft kann es weiter sein, wenn zumindest der röhrenförmige Abschnitt der Durchmischungsvorrichtung unterbrechungsfrei ausgeführt ist, d.h., dass der röhrenförmige Abschnitt (unter Absehung des Gasauslasses) eine geschlossene Mantelfläche ausbildet und Fluid nur über die Einlauföffnung und die Auslauföffnung in die bzw. aus der Durchmischungsvorrichtung gefördert werden kann. Optional kann auch der trichterförmige Einlaufbereich unterbrechungsfrei ausgeführt sein.

Durchmischungseffekte können weiter verbessert werden, wenn in der Durchmischungsvorrichtung eine Fluidleiteinrichtung vorgesehen ist, die das von unten nach oben gerichtete Strömungsfeld oder einen Teil davon zusätzlich in Drehung versetzt. Eine geeignete Fluidleiteinrichtung sind bspw. helixartige Einsätze, Wendel oder gegenüber der Längsachse schräg angestellte sich abschnittsweise von unten nach oben erstreckende Leitschaufeln.

In einer besonders zweckmäßigen Ausführung einer Fluidleiteinrichtung erstreckt diese sich zumindest teilweise unterhalb des Gasauslasses in Richtung des Einlaufs. Dies bewirkt, dass - analog eines Zyklons oder der Ablaufströmung in einer Badewanne - eine nach unten gerichtete Strömungsspirale entsteht, die sich über den Einlauf hinaus nach unten nach unten fortpflanzt, und so zu einer spiralförmigen Ansaugung am Boden des Fluidbehälters führt.

Um die Fluidleiteinrichtung konstruktiv einfach und damit kostengünstig herstellbar zu halten, kann die Fluidleiteinrichtung den Strömungskanal im Querschnitt nur unvollständig verdecken, insbesondere derart, dass sie sich außen entlang der Mantelfläche des Grundkörpers erstreckt, den Strömungskanal im Querschnitt gesehen jedoch nicht vollständig verdeckt, so dass ein zentrischer Teil des Strömungskanals offenbleibt, durch den das Fluid sowie über den Gasauslass eingebrachtes Gas auf direktem Wege von dem Einlauf zu dem Auslauf strömen kann. Dies ermöglicht es, auf konstruktiv aufwendige Gestaltungen, insb. durchgängige archimedische Schrauben, verzichten zu können, ohne auf den Vorteil einer spiralförmigen Ansaugung im Einlaufbereich sowie unterhalb davon verzichten zu müssen.

Die Fluidleiteinrichtung ist hierfür vorzugsweise mehrteilig als eine Vielzahl von Leitschaufeln ausgeführt, die sich jeweils abschnittsweise wendelartig entlang der Mantelfläche des Grundkörpers der Durchmischungsvorrichtung emporwinden.

Die Fluidleiteinrichtung bzw. ihre Teile sind vorteilhaft lösbar mit bzw. an dem hohlleiterartigen Grundkörper der Durchmischungsvorrichtung befestigt, bspw. angeschraubt. Als separat ausgeführte und erst nachträglich angefügte Bauteile behindern diese dann insb. die Stapelbarkeit von röhrenförmigen Abschnitten nicht, wenn diese kegelförmig ausgeführt sind.

Um die Wartungsintensität zu verringern, ist der Gasauslass der Durchmischungsvorrichtung vorteilhaft so angeordnet, dass er unmittelbar in die Mantelfläche des röhrenförmigen Abschnittes mündet und praktisch bündig mit der Mantelfläche abschließt, ohne wesentlich in den Strömungskanal hineinzuragen. Hierdurch wird vermieden, dass sich mit dem Fluid mittransportierte Feststoffe oder Sedimentanteile an dem Gasauslass verfangen oder an diesem anwachsen können. Reinigungsintervalle für die Durchmischungsvorrichtung können hierdurch verringert, wenn nicht sogar gänzlich abgeschafft werden. Ein bündiges Abschließen im Sinne der Erfindung ist insb. dann gegeben, wenn der Gasauslass um nicht mehr als 15%, bevorzugt weniger als 10%, weiter bevorzugt nicht mehr als 5 % und besonders bevorzugt nicht mehr als 2% des Durchmessers der Durchmischungsvorrichtung auf Höhe des Gasauslasses in den Strömungskanal hervorsteht.

Bei dem Gasauslass der Durchmischungsvorrichtung handelt es sich vorzugsweise um genau einen Gasauslass mit vorzugsweise kreisförmiger Kontur. Der Gasauslass kann darüber hinaus vergittert sein, um ein Eindringen von Fremdstoffen in die Gaszuführung zuverlässig zu verhindern, weist jedoch keine sonstigen Luftverteilungseinrichtungen auf.

Für einen optimalen Saugeffekt ist der Gasauslass auf zweckmäßiger Höhe in der Durchmischungsvorrichtung angeordnet, insb. auf einer Höhe, die sich - bezogen auf die Gesamtlänge der Durchmischungsvorrichtung - im unteren Drittel der Durchmischungsvorrichtung befindet und bspw. einen Abstand zwischen 20 und 150cm zum Einlauf aufweist.

Bevorzugt ist es, wenn die Durchmischungsvorrichtung etwa eine Länge zwischen 1,5 und 4m aufweist. Hierdurch kann die Durchmischungsvorrichtung zweckmäßig in gängigen Fluidbehältern (Becken) mit Höhen zwischen 2 bis 6m eingesetzt werden. Bevorzugt ist auch, wenn die Gesamtlänge der Durchmischungsvorrichtung mindestens das Vierfache des Öffnungsquerschnitts des Auslaufs beträgt.

Teile der Durchmischungsvorrichtung können aus einem Metall, einem Kunststoff oder auch einer Keramik gefertigt sein. Bevorzugt ist jedoch, wenn wenigstens der Einlaufbereich aus einem Kunststoff, insbesondere einem Duromer oder Thermoplast, gefertigt ist. Dies erlaubt eine hohe Gestaltungsfreiheit in der Formgebung bei günstigen Herstellungskosten, leichtes Gewicht und eine hohe Standzeit auch in widrigem Umgebungsmilieu. Aus analogen Gründen kann auch der röhrenförmige Abschnitt aus einem Kunststoff gefertigt sein. Der Kunststoff ist vorzugsweise faserverstärkt.

Unter einem anderen Aspekt der Erfindung wird auch ein Verfahren zur Wasserbehandlung vorgeschlagen, das sich im Wesentlichen dadurch auszeichnet, dass zwei Fluidbehälter, die jeweils (mindestens) einen aus einer gemeinsamen Gasquelle gespeisten und in die Fluidbehälter hineinreichenden Gasauslass aufweisen, die hydraulisch über eine Überlaufkante miteinander verbunden sind, vorhanden sind, und die Fluidbehälter über die Gasauslässe mit einem Gas, insb. Luftsauerstoff zur aeroben Aktivierung von in den Fluidbehältern befindlichem Wasser, beaufschlagt werden, wobei die Gasauslass des einen Fluidbehälters sich hydrostatisch gesehen stets und immer oberhalb des Gasauslasses der Gaszuführung des anderen Fluidbehälters befindet.

Die Gaszuführung des einen Fluidbehälters kann dabei in einer nach dem Prinzip einer Mammutpumpe arbeitende Durchmischungsvorrichtung angeordnet sein.

Das Verfahren kann eine Beschickungsphase, eine Sedimentationsphase sowie eine Dekantierungsphase (Abzugsphase) und ggfs. auch eine Gaszuführungsphase aufweisen, wobei diese Phasen zeitlich oder örtlich getrennt sein können. Für die Bedeutung der unterschiedlichen Phasen wird auf die vorherigen Ausführungen verwiesen. Eine zeitliche Trennung meint, dass die Phasen zeitlich gesehen nacheinander ausgeführt werden. Eine örtliche Trennung meint, dass die Phasen auch zeitgleich, jedoch an verschiedenen Orten durchgeführt werden, was bspw. so realisiert werden kann, dass eine Befüllung mit Fluid kontinuierlich in den ersten Fluidbehälter (und über die Überlaufkante auch kontinuierlich in den zweiten Fluidbehälter) erfolgt, für die Sedimentationsphase jedoch ein Teil dieser Fluide aus dem ersten und/oder zweiten Fluidbehälter entnommen und in ein separates Sedimentations- und Abzugsbecken geleitet wird, in dem dann nacheinander die Sedimentationsphase und die Abzugsphase durchgeführt werden.

In einer vorteilhaften Weiterbildung des Verfahrens erfolgt die Wasserzuführung in den ersten Fluidbehälter kontinuierlich und ununterbrochen, insbesondere auch während der Dauer der Abzugsphase, in der oberflächennahes Wasser aus dem zweiten Fluidbehälter abgezogen wird. Dabei ist der zweite Fluidbehälter durch eine Trennwand in einen ersten und einen zweiten Teil zweigeteilt, wobei der erste und der zweite Teil über die eine zweite Überlaufkante ausbildende Oberkante der Trennwand hydraulisch miteinander verbunden sind, die zweite Überlaufkante jedoch ein variables Höhenprofil aufweist. Hierdurch breitet sich über die zweite Überlaufkante in den zweiten Teil des zweiten Fluidbehälters einströmendes Wasser nur langsam in dem zweiten Teil aus, so dass keine oder nur eine geringfügige Vermischung von unterschiedlichen in dem zweiten Teil befindliche Wasserphasen - insb. Klarwasser, Rohwasser und Sedimentschicht - auftritt.

Eine Gaszuführung erfolgt dabei über die vorbeschriebene Gaszuführung in den zweiten Teil des zweiten Fluidbehälters. Optional kann zusätzlich auch eine Gaszuführung in den ersten Teil des zweiten Fluidbehälters über eine zusätzliche Gaszuführung vorgesehen sein.

Die unterschiedlichen Aspekte der Erfindung werden nachfolgend anhand der beiliegenden Figuren beispielhaft erläutert, wobei gleiche oder vergleichbare Bauteile mit gleichen oder vergleichbaren Bezugszeichen versehen sind, so dass auf jeweils vor- und/oder nachstehende Erläuterungen zu diesen Bezugszeichen wechselseitig Bezug genommen wird.

Dabei zeigen
- Fig. 1: eine Schemaskizze einer erfindungsgemäßen Wasserbehandlungsvorrichtung,
- Fig. 2: eine Schemaskizze einer erfindungsgemäßen Durchmischungsvorrichtung,
- Fig. 3: eine Schnittansicht (Fig. 3A) bzw. eine Explosionsdarstellung (Fig. 3B) sowie eine Aufsicht (Fig. 3C) der erfindungsgemäßen Durchmischungsvorrichtung aus Fig. 2,
- Fig. 4: eine Schemaskizze in zwei Zuständen (Fig. 4A und 4B) einer Wasserbehandlungsvorrichtung mit unterschiedlich tiefen Fluidbehältern,
- Fig. 5: eine Schemaskizze analog Fig. 4 bei Einsatz einer Durchmischungsvorrichtung,
- Fig. 6: eine Schemaskizze analog den Fig. 4 und 5 bei Einsatz einer erfindungsgemäßen Durchmischungsvorrichtung,
- Fig. 7: Schemaskizzen einer erfindungsgemäßen Wasserbehandlungsvorrichtung in einer Draufsicht von oben (Fig. 7A), einer Schnittansicht (Fig. 7B) und einer Seitenansicht (Fig. 7C),
- Fig. 8: Schemaskizzen einer erfindungsgemäßen Wasserbehandlungsvorrichtung mit höhenvariabler Überlaufkante in einer Draufsicht von oben (Fig. 8A) und einer Schnittansicht (Fig. 8B) sowie
- Fig. 9: eine Skizze analog Fig. 8A mit einer Variante einer höhenvariablen Überlaufkante.

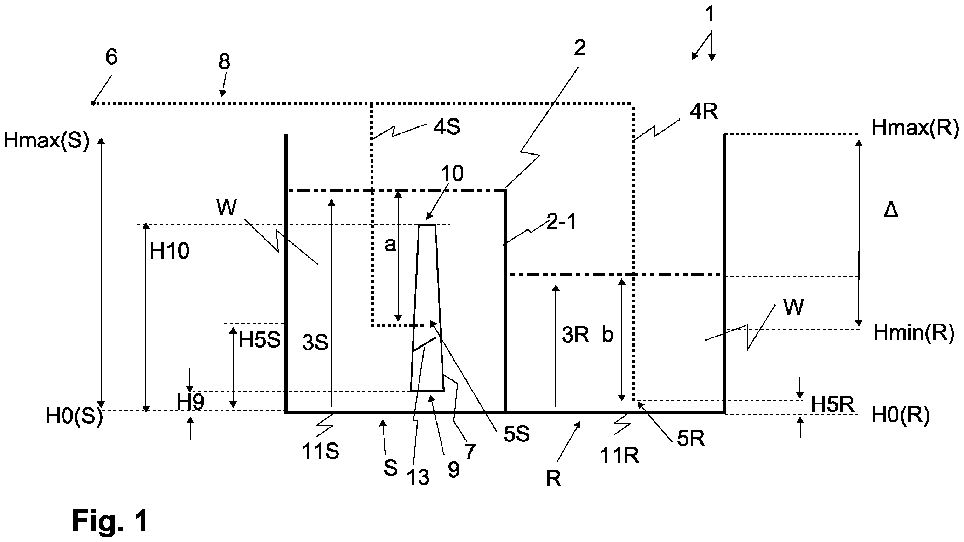

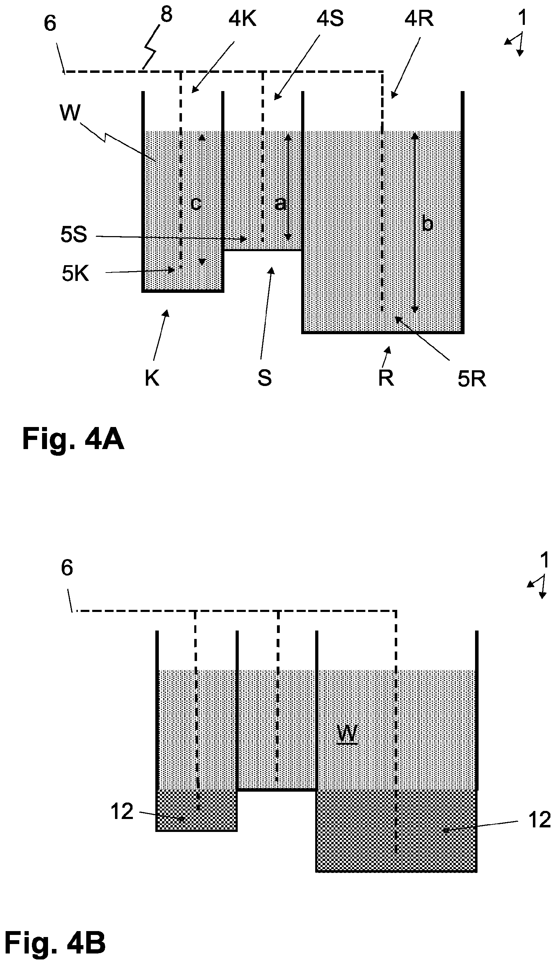

Für ein besseres Verständnis der Erfindung soll anhand der Fig. 4A und 4B zunächst einige Grundproblematiken in der Wasserbehandlung holzschnitzartig erläutert werden, bevor insb. mit der Fig. 1 auf die eigentliche Erfindung eingegangen wird. Die Erfindung wird nachfolgend anhand einer Abwasserbehandlung dargelegt, kann jedoch *mutatis mutandis* auch auf andere Anwendungsgebiete ausgeweitet werden.

Die in den Fig. 4A und B gezeigten Schemazeichnungen stellen ein dreigeteiltes Becken dar, das in drei fluidisch in Serie geschaltete Teilbecken, die nachfolgend als Selektor S, Kaptor K und Reaktor R bezeichnet werden. Alle drei Teilbecken K, S, R sind mit einem Fluid, hier dem Wasser W, gefüllt und weisen jeweils eine in die Fluidbehälter vertikal hineinreichende Gaszuführungen 4K, 4S, 4R mit an ihrem jeweiligen, unteren Ende befindlichen Gasauslässen 5K, 5R, 5S auf. Über die Gasauslässe 5K, 5R, 5S kann ein Gas, hier komprimierte Umgebungsluft (Druckluft), in die Fluidbehälter S, K, R eingebracht werden. Die drei Gaszuführungen 4K, 4S, 4R sind über eine Zuführleitung 8 parallel geschaltet und mit derselben Gasquelle 6 verbunden.

Über einen nicht dargestellten Zulauf wird dem Selektor S frisches Rohwasser zugeführt, welches über eine ebenfalls nicht dargestellte erste Überlaufkante zur Zwischenspeicherung in den Kaptor K überläuft, und von dort über eine nicht dargestellte, zweite Überlaufkante in den Reaktor R. Die drei Teilbecken entsprechen in Ihrer Funktion im Wesentlichen den in der DE 1 2015 109 626 B3 beschriebenen als Kontaktor, Kaptor und Reaktor bezeichneten Becken, wobei das dort als Kontaktor bezeichnete Becken mit dem hier als Selektor S bezeichneten Teilbecken vergleichbar ist.

Wie aus den Figuren 4A und 4B ersichtlich, sind die drei Fluidbehälter S, K, Runterschiedlich tief. Die Böden (ohne Bezugszeichen) der Fluidbehälter S, K, Rweisen also eine unterschiedliche geodätische Höhe auf. Alle Gasauslässe sind auf gleichem Abstand zu den jeweiligen Böden der Fluidbehälter S, K, Rangeordnet und weisen in der Folge ebenfalls eine unterschiedliche geodätische Höhe auf. Gleichzeitig weisen die Fluidbehälter S, K, R eine gleiche Wasserlinie (Füllstand, Pegelstand) auf.

Dies hat zur Folge, dass bei Aktivierung der Gasquelle das Verhältnis der eingebrachten Gasmengen in die Fluidbehälter S, K, Rabhängig von dem jeweiligen am Gasauslass 5K, 5S, 5R wirkenden hydrostatischen Druck ist, was im Wesentlichen also den über den Gasauslässen befindlichen Wassersäulen entspricht, vgl. die hydrostatischen Höhen a, b, c in Fig. 4A. Da der hydrostatische Druck im mittleren Fluidbehälter S am geringsten ist, strömt die Luft bevorzugt in den mittleren Fluidbehälter S, während in den linken Fluidbehälter K weniger und in den rechten Fluidbehälter R so gut wie keine Luft eingetragen wird. Dies hat unerwünschte Ablagerungen 12 am Boden der nicht bzw. nur schlecht belüfteten Fluidbehältern K und R zur Folge, wie es in Fig. 4B skizziert ist.

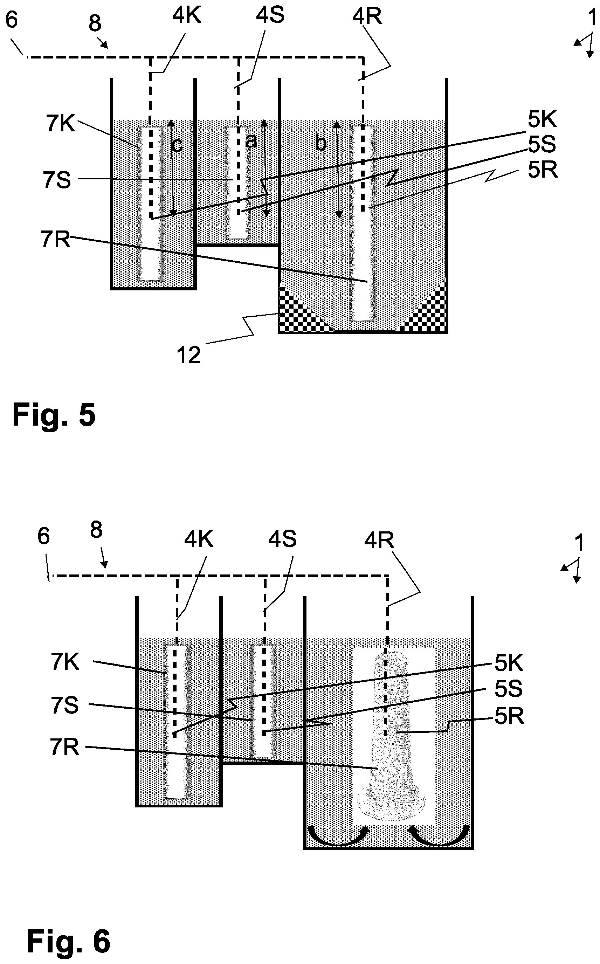

Um auf aufwendige Regeleinrichtungen, bei der für jede Gaszuführung der Zuführdruck unter Berücksichtigung des jeweiligen hydrostatisch an den Gasauslässen 5K, 5S, 5R wirkenden Drucks durch z.B. Druckminderer, angepasst wird, verzichten zu können, werden erfindungsgemäß auch als Druckluftheber bezeichnete Mammutpumpen 7K, 7R, 7S eingesetzt, die in den Ausführungsbeispielen der Fig. 5 und Fig. 6 jeweils vollständig in die Fluidbehälter S, K, Reingebracht sind und bis in die Nähe des jeweiligen Fluidbehälterbodens reichen.

Bei Mammutpumpen handelt es sich im einfachsten Fall um simple Rohre, in die auf bestimmter Höhe jeweils eine Gaszuführung mit einem Gasauslass eingebracht ist. Die Gasauslässe 5R, 5K, 5S sind in den mit dem Ausführungsbeispiel der Fig. 4A und B vergleichbaren Ausführungsbeispielen der Fig. 5 und 6 jeweils auf derselben geodätischen Höhe angebracht, weshalb die Druckverhältnisse an/bei allen Gasauslässen 5R, 5K, 5S dieselben sind. Hierdurch ist die Gaseintragsmenge in alle Fluidbehälter S, K, R gleich.

In den Mammutpumpen 7K, 7R, 7S kann sich das unter Druck eingebrachte Gas entspannen, steigt nach oben und erzeugt so einen Sog, der vermittels der Rohre bis auf Bodenhöhe der Fluidbehälter K, S, R wirkt, die unteren Wasserschichten gemeinsam mit allfällig dort vorhandenen Sedimenten von unten nach oben fördert und so die unteren Wasserschichten mit den oberen Wasserschichten durchmischt. Die Mammutpumpen können deshalb auch als Durchmischungsvorrichtung bezeichnet werden.

Durch die unterschiedlichen Längen der Mammutpumpen können selbst unterschiedlich tiefe Fluidbehälter aus einer gemeinsamen Gasquelle ohne zwischengeschaltete Druckregeleinrichtungen mit einem Gas aus derselben Gasquelle versorgt werden.

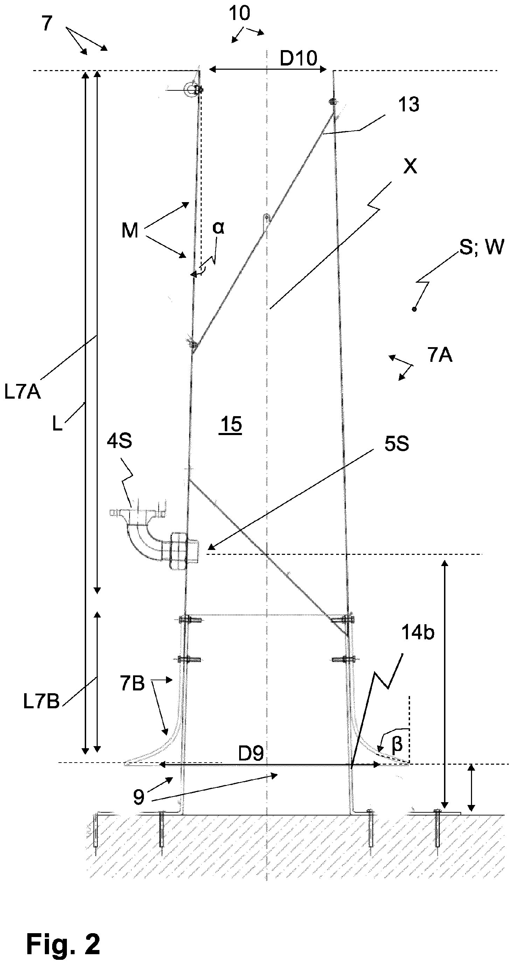

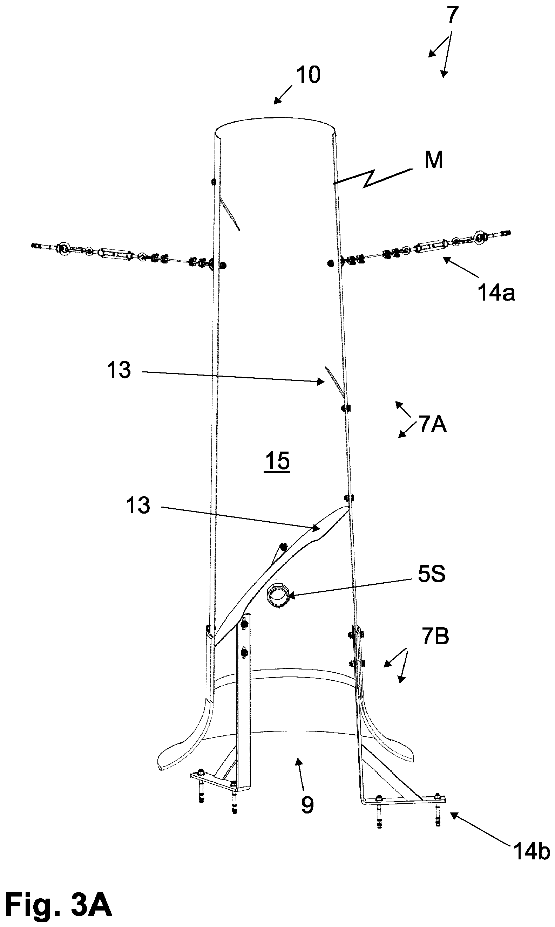

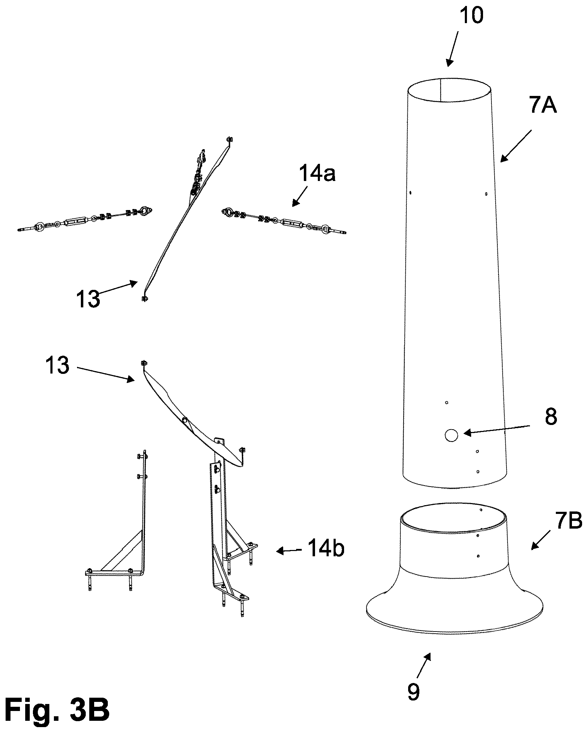

Fig. 6 zeigt eine Weiterentwicklung des Ausführungsbeispiels aus Fig. 5, die sich im Wesentlichen nur durch die spezielle Art der in dem Fluidbehälter S eingesetzten Mammutpumpe 7R gegenüber der Mammutpumpe 7R im Ausführungsbeispiel der Fig. 5 unterscheidet. Die Mammutpumpe 7R ist im Gegensatz zu den übrigen, rohrförmigen (hohlzylindrischen) Mammutpumpen 7K, 7S an ihrem unteren Ende mit einem trompetenartigen Einlauf versehen, welcher die Ansaugwirkung bzw. das Einzugsgebiet wesentlich vergrößert, so dass - anders als im Ausführungsbeispiel der Fig. 5 - auch weiter entfernte Bodenbereiche von der Sogwirkung erfasst werden. Mammutpumpen mit trompetenförmigem Einlaufbereich eignen sich insb. für den Einsatz für Fluidbehälter mit großen Grundflächen sowie für Fluidbehälter mit unregelmäßigen Querschnitten, z.B. sternförmigen Querschnitten, welche durch z.B. mechanischen Durchmischungsvorrichtungen, wie z.B. Rührern, kaum effizient zu bewirtschaften sind. Ein konkretes Ausführungsbeispiel einer Durchmischungsvorrichtung mit einem trompetenförmigen Einlaufbereich wird weiter unten im Zusammenhang mit den Fig. 2 und 3A bis 3C beschrieben.

Fig. 1 zeigt eine Schemaskizze eines Ausführungsbeispiels einer als Teil einer Kläranlage ausgebildeten Abwasserbehandlungsvorrichtung 1, die aus einem ersten und einem zweiten fluidisch in Serie geschalteten ersten bzw. zweiten Fluidbehälter, dem Selektor S und dem Reaktor R besteht. Die Abwasserbehandlungsvorrichtung wird dabei in einem sog. Batch-Betrieb (Chargenbetrieb) mit einer jeweils aufeinanderfolgenden Beschickungs- und Belüftungsphase, einer Sedimentations- und einer Abzugsphase gefahren.

Während der Beschickungs- und Belüftungsphase wird über einen in dem Selektor S angeordneten Zulauf zu behandelndes Abwasser W über einen nicht dargestellten Zulauf in den Selektor S eingeleitet, von wo es ab Erreichen eines vorgegebenen Pegelstandes, nämlich der mit 2 gekennzeichneten Überlaufkante, in den Reaktor R fließt. Die Überlaufkante 2 ist durch die Oberkante einer den Selektor S und den Reaktor R trennenden Trennwand 2' ausgebildet. Selektor S und Reaktor R weisen beide eine Tiefe Hmax(S) bzw Hmax(R) von z.B. 6m gerechnet ab einer Oberkante bzw. eine Tiefe von 5m gerechnet ab der Überlaufkante 2 auf. Die Überlaufkante 2 erstreckt sich horizontal geradlinig, d.h. sie weist eine gleichbleibende Höhe auf.

Der Pegelstand im Selektor S und Reaktor R ist in der Fig. 1 mit 3S bzw. 3R gekennzeichnet. Bei dem in der Fig. 1 gezeigten Zustand handelt es sich um die Beschickungs- und Belüftungsphase, bei der der Selektor mit zu behandelndem Wasser beschickt wird, so dass der Pegelstand 3S in dem Selektor im Wesentlichen unverändert auf Höhe der Überlaufkante 2 bleibt, während der Pegelstand 3R des Reaktors R beständig ansteigt. Während dieser Phase wird Druckluft über zwei in dem Selektor S bzw. Reaktor R angeordnete Gasauslässe 5S bzw. 5R in die Fluidbehälter S, R eingeleitet. Der Gasauslass 5S des Selektors S ist dabei auf einer Höhe H5S gegenüber dem Boden 11S des Selektors S angeordnet und befindet sich auf einer hydrostatischen Höhe a. Die hydrostatische Höhe a ist dabei definiert durch die über dem Gasauslass 5S aktuell befindliche Wassersäule. In analoger Weise befindet sich der Gasauslass 5R des Reaktors R auf einer Höhe 5R über dem Boden 11R des Reaktors R. Er weist eine hydrostatische Höhe b auf, die sich aus der Wassersäule über dem Gasauslass 5R ergibt.

Die Wassersäule über dem Gasauslass 5S des Selektors S bleibt über die gesamte Beschickungs- und Belüftungsphase weitestgehend unverändert und steigt erst dann an, wenn der Füllstand 3R im Reaktor R ebenfalls die Höhe der Überlaufkante 2, d.h. 5m, erreicht. Ab dann steigen der Pegelstand des Selektors S und des Reaktors R gemeinsam. Die Schwankungsbreite zwischen dem Pegelstand auf Höhe der Überlaufkante 2, also 5m, und dem maximalen Füllstand, also 6m, ist jedoch im Vergleich zur Fluidbehältertiefe mit 1m relativ gering.

Die Wassersäule über dem Gasauslass 5R des Reaktors R steigt mit zunehmendem Pegelstand 3R in dem Reaktor R. Da nur dem Reaktor R, nicht jedoch dem Selektor S, in der nachfolgend noch näher erläuterten Abzugsphase Wasser bis zu einem minimalem Pegelstand Hmin(R) entnommen wird, steigt und sinkt der Pegelstand 3R im Reaktor R zyklisch über jeden Zyklus aus Beschickungs- und Belüftungsphase, Sedimentations- und Abzugsphase.

Durch den schwankenden Pegelstand 3R in dem Reaktor R ergibt sich eine schwankende hydrostatische Höhe b des Gasauslasses 5R im Reaktor R bzw. sich schwankende, hydrostatische Drücke auf Höhe des Gasauslasses 5R des Reaktors R. Da die hydrostatische Höhe a am Gasauslass 5S des Selektors S hingegen im Wesentlichen konstant bleibt, ergibt sich ein schwankendes Druckverhältnis der Drücke am Gasauslass 5S des Selektors S und dem Gasauslass 5R des Reaktors R.

Sowohl dem Selektor S als auch dem Reaktor R sollen gewisse Mindestmengen an Luft, zugeführt werden. Die Luft im Selektor S soll dabei möglichst wenig Sauerstoff in das Wasser im Selektor S eintragen und das Wasser hauptsächlich durchmischen, die Luft im Reaktor R dient dagegen hauptsächlich der Sauerstoffübertragung. Der Sauerstoffbedarf im Reaktor R ergibt sich dabei u.a. aus den in dem zu behandelndem Wasser (Abwasser) vorhandenen Verbindungen, die oxidativ umgesetzt werden können und z.B. mit der Kennzahl des biochemischen Sauerstoffbedarfs sowie des chemischen Sauerstoffbedarfs (BSB bzw. CSB) beschrieben werden. Aber auch andere Faktoren, wie z.B. die Menge an Ammonium im Wasser, können einen Einfluss auf den Sauerstoffbedarf haben. Im vorliegenden Fall dient der Selektor S primär als Adsorptionsbecken, in dem das darin befindliche Wasser mit über den Gasauslass 5S eingeblasene Luft mit dem sog. Belebtschlamm vermischt wird, und die organischen Verbindungen zum Teil anoxisch umgesetzt werden oder auch lediglich an der Biomasse adsorbiert oder in diese absorbiert wird. Eine gründliche Durchmischung des insb. am Boden des Selektors S sich absetzenden Belebtschlamms ist daher besonders wichtig. Der Sauerstoffbedarf in dem Selektor S ist entsprechend hoch - wird aber absichtlich nicht durch die eingetragene Luftmenge abgedeckt.

Demgegenüber dient der Reaktor R als belüftetes Belebungsbecken, da den Reaktor R das bereits im Selektor S vorbehandeltes Wasser über die Überlaufkante 2 erreicht. Der Reaktor R dient daher primär der Aktivierung von sich anschließenden Nachfolgeprozessen, u.a. der Denitrifikation d.h. der Umsetzung von Nitrat zu gasförmigen Stickstoff sowie vielen weiteren Prozessen, die im Rahmen eines gezielten Biomassewachstums zum weitestgehenden Abbau organischer Verbindungen beiträgt. Diese Prozesse finden hauptsächlich bei gegenüber dem Selektor S deutlich geringeren Gleichgewichtskonzentrationen statt. Daher beträgt das Volumen des Reaktors R auch zumeist ein Vielfaches des Volumens des Selektor S.

Aufgrund dieser unterschiedlichen Anforderungen ist der Gasauslass 5S des Selektors - bei jedem Pegelstand - hydrostatisch höher positioniert (hydrostatische Höhe a) als der Gasauslass 5R des Reaktors R (hydrostatische Höhe b), Durch eine deutlich größer dimensionierte Gaszuleitung 4R in den Reaktor als die Zuleitung 4S in den Selektor S ergibt sich, dass die Eintragungsrate an Druckluft bzw. Sauerstoff in den Reaktor R entsprechend höher ist als in den Selektor S, obwohl beide Gasauslässe 5R, 5S mittels ihrer Gaszuführungen 4S bzw. 4R über eine gemeinsame Zuführleitung 8 mit derselben Gasquelle 6 verbunden sind und sich keine Druckminderer oder -regler zur Kontrolle der Gaseinbringungsmenge in einer der Gaszuführungen 4R, 4S befindet, d.h. beiden Gaszuführungen 4S, 4R mit Druckluft unter demselben Versorgungsdruck versorgt werden. Durch die unterschiedliche Art der Gaseinbringung zum einen in den Selektor S durch eine nachfolgend näher beschriebene Durchmischungsvorrichtung 7, - mit einer sehr grobblasigen Belüftung auf der einen Seite, sowie über die meist sehr kleinen Gasauslässe 5R in dem Reaktor R mit einer eher feinblasigen Belüftung auf der anderen Seite -, ergibt sich immer ein deutlich höherer Sauerstoffübergang in den Reaktor R als in den Selektor S. Dies zumal auch dadurch, dass der Sauerstoffübergang in den Reaktor R durch den Partialdruck bestimmt wird, der wiederum vom hydrostatischen Druck b im Reaktor R abhängt, der gegenüber dem hydrostatischen Druck a im Selektor S immer größer ist.

Konkret befindet sich der Gasauslass 5R des Reaktors bodennah etwa 30cm über dem Boden des Reaktors R (Bezugszeichen H5R) während der Gasauslass 5S des Selektors S sich etwa 0,5-1,5m über dem Boden des Selektors S befindet (Bezugszeichen H5S). Da bei einem Abstand von 0,5-1,5m zum Boden eine Aufwirbelung und Vermischung des am Boden des Selektors S befindlichen Belebtschlamms durch die Luftzuführung allein nicht möglich wäre, ist der Gasauslass 5S in der als Mammutpumpe ausgebildeten Durchmischungsvorrichtung 7 installiert.

Die Durchmischungsvorrichtung 7 wird mit Verweis auf die Fig. 2 und 3A bis 3C näher beschrieben. Sie besteht im Wesentlichen aus einem zweiteiligen, hohlleiterartigem Grundkörper mit einer Mantelfläche M, welcher einen Strömungskanal 15 zwischen einem vertikal unteren Einlauf 9 und einem oberen Auslauf 10 definiert. Der Grundkörper erstreckt sich dabei entlang einer vertikal angeordneten Längsachse X und ist 3,5 m lang. Der Grundkörper befindet sich unter Wasser; der Auslauf ist etwa 100 cm unterhalb der Überlaufkante 2 angeordnet (Bezugszeichen H10). Die Mantelfläche M ist im Wesentlichen nicht durchbrochen, weist insb. also keine Öffnungen oder Zuführungen auf, über die Wasser in den Strömungskanal 15 ein- oder ausströmen könnte (die Einlauföffnung des Einlaufs 9 und die Auslauföffnung des Auslaufs 10 ausgenommen).

Der Grundkörper besteht aus einem unteren trichterförmigen Abschnitt 7B - auch Einlaufbereich genannt - mit einer Länge L7B von 70 cm und einem sich daran anschließenden röhrenförmigen Abschnitt 7A mit einer Länge L7A von 3 m. Diese zwei Teile sind in überlappender Weise mit einer Überlappung von 20cm aufeinander gesteckt und lösbar über Schrauben miteinander verbunden (vgl. die Schrauben in Fig. 2 und Fig. 3A). Über die Schrauben sind zusätzlich auch einer Befestigungsvorrichtung 14 zugeordnete Standwinkel 14b an dem Grundkörper befestigt, über die der Grundkörper fest am Boden 11S des Selektors S mit einem Abstand H9 von 50 cm gegenüber dem Boden 11S des Selektors S verankert werden kann. Zusätzlich wird der Grundkörper über Spannseile 14a der Befestigungsvorrichtung 14, welche weiter oben am röhrenförmigen Abschnitt 7A angreifen, in dem Selektor S gesichert, so dass der Grundkörper im Wesentlichen vertikal in dem Selektor S ausgerichtet ist.

Auf Höhe des unteren Drittels der Durchmischungsvorrichtung 7 - bezogen auf die Gesamtlänge L gemessen in Längsrichtung der Längsachse X - ist der Gasauslass 5S angeordnet, der muffenartig in der Wandung des röhrenförmigen Abschnitts 7A verschraubt ist und im Wesentlichen bündig mit der Wandung abschließt. Ein Festsetzen von im Fluidstrom mitgetragenen Festkörpern, und eine in der Folge entstehende Verstopfung, sind daher praktisch kaum möglich.

Die Luftzuführung erfolgt exzentrisch. Sie ist in dem dargestellten Ausführungsbeispiel in der Höhe unveränderlich. In anderen, nicht dargestellten Ausführungsformen kann die Luftzuführung, d.h. insb. der Gasauslass, in der Höhe variabel ausgeführt sein oder zumindest eine Vielzahl von auf unterschiedlicher Höhe positionierten Gasauslässen aufweisen, von denen nur ein Gasauslass mit der Gasquelle verbunden ist, während die anderen als sog. Blindauslässe verschlossen werden bzw. sind..

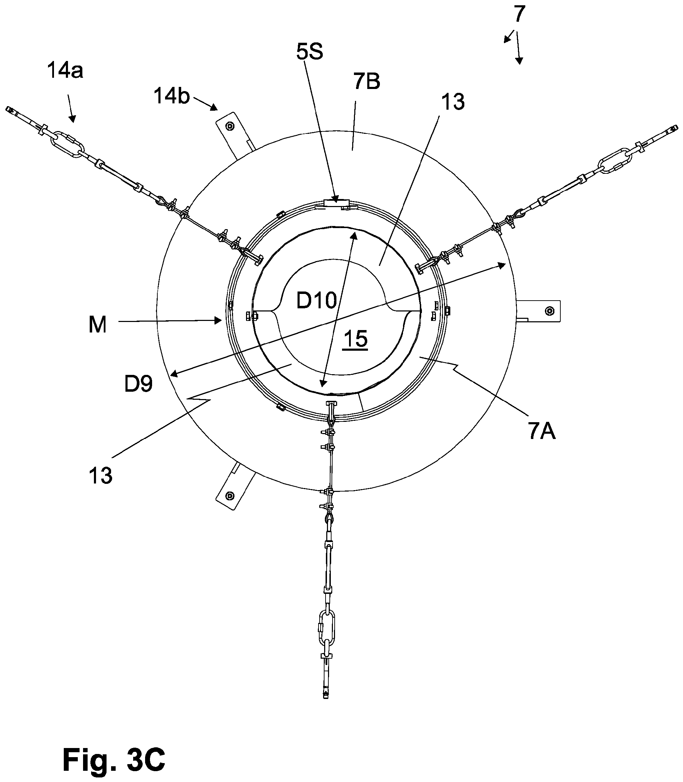

Über der Gaszuführung 5S sind in dem röhrenförmigen Abschnitt 7A ferner eine aus zwei Leitblechen bestehende Fluidleiteinrichtung 13 über Schrauben lösbar befestigt. Die Leitbleche sind sichelartig geformt, schräg gegenüber der Vertikalen und übereinander angeordnet sowie um 180° gegeneinander verdreht bzgl. der Längsachse X, so dass in dem röhrenförmigen Abschnitt 7A aufsteigendes Wasser bzgl. der Längsachse X in Drehung versetzt wird. Die Fluidleiteinrichtung 13 ist so bemessen, dass sie sich in jedem Fall noch unterhalb der Gasauslassöffnung SS fortsetzt, in der Mitte des röhrenförmigen Abschnitts 7A jedoch einen Zylinderabschnitt des Strömungskanals 15 unberührt lässt, so dass ein Teil des Fluidstroms auf direktem Wege, d.h. vertikal, durch die Durchmischungsvorrichtung 7 strömen kann. Dies ist gut in der Draufsicht der Fig. 3C zu erkennen. Dadurch erreicht man ein spiralförmiges Ansaugen des Fluids, welches sich nach unten hin gerichtet zur Ansaugöffnung 9 fortsetzt und darüber hinaus eine spiralförmige Ansaugbewegung in den dem Beckenboden des Selektor S nahegelegenen Fluidschichten induziert.

Der röhrenförmige Abschnitt 7A ist kegelförmig (kegelabschnittsförmig) ausgebildet und weist, wie insb. aus Fig. 2 ersichtlich, einen Öffnungswinkel von 2α auf. Der Öffnungswinkel 2α beträgt etwa 5°. Dies ermöglicht, dass mehrere röhrenförmige Abschnitte im nichtinstallierten Zustand auf platzsparende Weise aufeinander gestapelt werden können. Der kegelförmige Abschnitt 7A ist aus einem Blech gefertigt, das röhrenförmig gebogen und an seinen Längskanten stoffschlüssig verlötet wurde.

Der unten befindliche trichterförmige Abschnitt 7B ist trompetenartig, d.h. verrundet mit einer parabolischen Kontur, ausgeführt, was laminaren Strömungsverhältnissen ohne Strömungsabrisse im Einlaufbereich zuträglich ist. Der trichterförmige Abschnitt weist an seinem äußeren Ende des Einlaufs 9 einen Öffnungswinkel β von 45° auf. Der trichterförmige Abschnitt 7B ist aus einem glasfaserverstärkten Polyesterharz-Kunststoff in einem Kunststoffspritzgußverfahren hergestellt. Andere Materialien sind möglich.

Die Einlauföffnung im Einlauf 9 ist kreisförmig ausgebildet, weist einen Durchmesser D9 von 80cm auf, und ist senkrecht zur Längsachse ausgerichtet, d.h. horizontal. Die Einlauföffnung des Einlaufs 9 befindet sich 20cm (H9) über dem Boden. Die Einlauföffnung bildet den Beginn des Strömungskanals der Durchmischungsvorrichtung 7. Der Strömungskanal verengt sich infolge des trompetenartigen Einlaufs zunächst bis auf 50cm am oberen Ende des trichterförmigen Abschnitts 7B und anschließend weiter auf etwa 40cm bis zum Auslauf am oberen Ende des röhrenförmigen Abschnitts 7A. Der Auslauf besteht analog dem Einlauf aus einer kreisförmigen Auslauföffnung mit dem Durchmesser D10 von 40cm und ist horizontal angeordnet.

Die Böden von Reaktor R und dem Selektor S sind in dem Ausführungsbeispiel der Fig. 1 plan und befinden sich auf derselben geodätischen Höhe (H0(R) = H0(S)). Der Erfindungsgedanke lässt sich jedoch auch auf Fluidbehälter übertragen, bei denen die Böden der Fluidbehälter auf unterschiedlichen geodätischen Höhen gelegen sind, oder uneben, z.B. trichterförmig, ausgeführt sind.

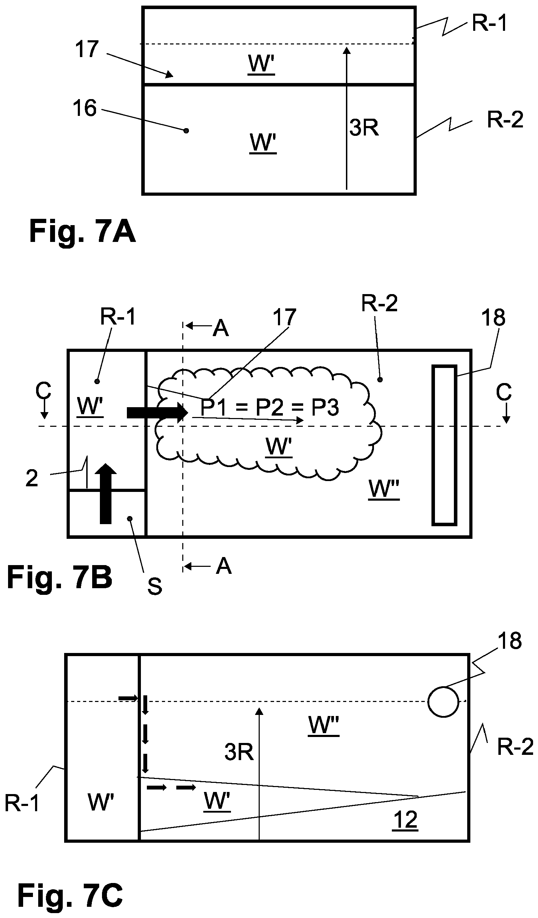

In den Fig. 7A bis C ist eine mögliche Variante des Ausführungsbeispiels der Fig. 1 gezeigt. Die dort gezeigte Wasserbehandlungsvorrichtung 1 umfasst wieder den ersten Fluidbehälter, den Selektor S, sowie den zweiten Fluidbehälter, den Reaktor R, die über die erste Überlaufkante 2 fluidisch miteinander verbunden sind. Der Reaktor R ist in diesem Falle jedoch durch eine zweite Trennwand 16 in zwei Teile R-1, R-2 geteilt, wobei die zweite Trennwand 16 eine entsprechende Überlaufkante 17 ausbildet, über die der erste und der zweite Teil R-1, R-2 fluidisch miteinander kommunizieren.

Der Reaktor R und der Selektor S sind gemeinsam in einem entsprechend unterteilten, quaderförmigen Becken mit Kantenlängen von 10 auf 25m angeordnet. Der Selektor S, und der erste und zweite Teil R-1, R-2 des Reaktors R ihrerseits wiederum jeweils quaderförmig mit Kantenlängen von 2m auf 5m, 8m auf 5m bzw. 10m auf 20m ausgebildet sind. Der Selektor und der erste Teil R-1 bilden auf der einen Seite des quaderförmigen Beckens einen durchgehenden Streifen mit der Grundfläche 5m auf 10m. Auf der gegenüberliegenden Seite des quaderförmigen Beckens ist im zweiten Teil R-2 die Abzugsvorrichtung 18 angeordnet. Die Abzugsvorrichtung 18 schwimmt mittels Schwimmkörper auf der Wasseroberfläche. Über die Abzugsvorrichtung 18 kann Wasser oberflächennah aus dem zweiten Teil R-2 abgezogen werden.

Die erste und die zweite Überlaufkante 2 bzw. 17 sind jeweils horizontal verlaufend und geradlinig ausgebildet. Das geradlinig verlaufende Höhenprofil der zweiten Überlaufkante 17 ist in der Schnittansicht der Fig. 7A zu erkennen. Die Überlaufkanten 2, 17 stehen, aufeinander senkrecht, wie es in der Draufsicht der Fig. 7A ersichtlich ist.

Luftzuführungen und Gaseinlässe ebenso wie die Durchmischungsvorrichtung 7 sind in den Fig. 7A bis C aus Vereinfachungsgründen nicht dargestellt, jedoch analog den vorherigen Ausführungen vorhanden.

Wie zuvor dient der Selektor S primär der Durchmischung von in den Selektor S eingeführtem Wasser mit Belebtschlamm, während der zweite Teil R-2 des Reaktors R als Belebungs- und Sedimentationsbecken dient. Der erste Teil R-1 des Reaktors R dient als Zwischenspeicher analog dem im Zusammenhang mit den Fig. 4 bis 6 erwähnten Kaptor K. Der Selektor S kann als ein erster Fluidbehälter und der Reaktor als ein zweiter Fluidbehälter aufgefasst werden.

Wenn im Betrieb Wasser über einen nicht dargestellten Zulauf in den Selektor S einströmt, fließt dieses über die Überlaufkante 2 zunächst in den ersten Teil R-1 des Reaktors R, und über die zweite Überlaufkante 17 in den zweiten Teil R-2 des Reaktors R. Dabei bilden sich im ungestörten Zustand - d.h. wenn keine Verwirbelung oder Aufmischung des Wassers durch eingeblasene Luft induziert wird - im zweiten Teil typischerweise drei relativ scharf voneinander abgegrenzte Phasen mit homogenen Zusammensetzungen aus, nämlich der sich am Boden in Form von Sedimenten 12 absetzende Belebtschlamm mit relativ hoher Dichte, einer darüber befindlichen Melange aus Wasser und Belebtschlamm mit mittlerer Dichte, nachfolgend als ungeklärtes Wasser W' bezeichnet, sowie darüber Klarwasser W" mit der geringsten Dichte, welches nur sehr geringe Anteile an Belebtschlamm und Schwebstoffen aufweist.

Ziel ist es, über die Abzugsvorrichtung 3 nach Möglichkeit nur Klarwasser W" aus dem zweiten Teil R-2 des Reaktors R abzuziehen, ohne dabei das ungeklärte Wasser W' aus Wasser und Belebtschlamm mit anzusaugen.

Bei kontinuierlicher Wasserzuführung wird sich das über die zweite Überlaufkante 17 zugeführte ungeklärte Wasser W' jedoch keilartig zwischen den Belebtschlamm am Boden des Fluidbehälters sowie das Klarwasser W" drängen und in der Schichtdicke weiter anwachsen, wie es in Fig. 7C skizziert ist, so dass auf absehbare Zeit das ungeklärte Wasser W' von der Abzugsvorrichtung 3 angesaugt werden würde. Wenn ungeklärtes Wasser W' unmittelbar von der Abzugsvorrichtung 3 angesaugt wird, wird dies auch als Kurzschluss bezeichnet. Um das Ansaugen des ungeklärten Wassers W' zu vermeiden, muss daher der Zufluss an ungeklärtem Wasser W' unterbrochen werden und ausreichend Zeit für Umsetzungsprozesse und eine anschließende Sedimentation eingeräumt werden, so dass der Belebtschlamm und Verunreinigungen zu Boden sinken können. Dies verlängert Zykluszeiten stark.

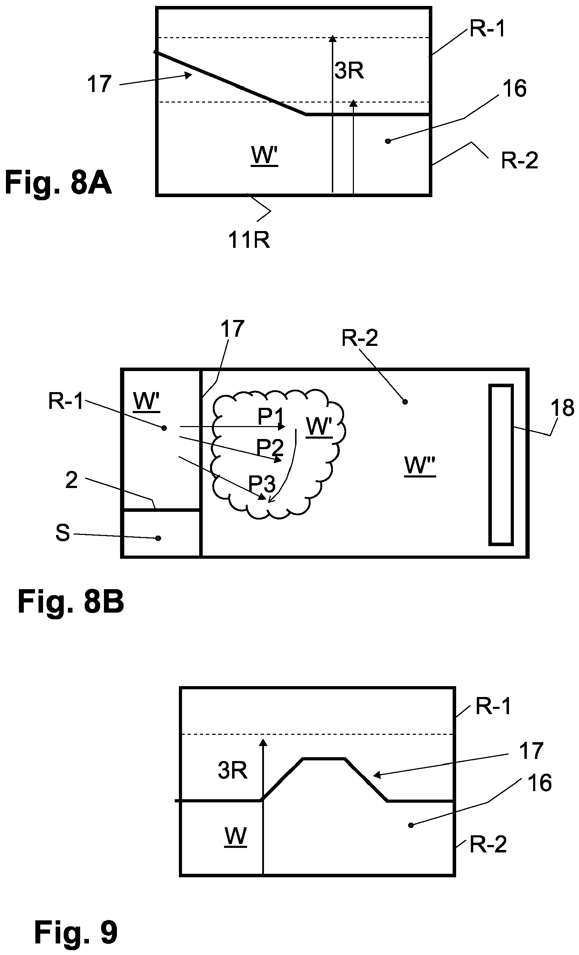

Um die Zykluszeiten zu verkürzen und insb. eine kontinuierliche, unterbrechungsfreie Zuführung von ungeklärtem Wasser W' in den zweiten Fluidbehälter zu ermöglichen, ist im Gegensatz zum Ausführungsbeispiel der Fig. 7A bis 7C im Ausführungsbeispiel der Fig. 8A und 8B die zweite Überlaufkante 17 daher mit einem veränderlichen Höhenprofil ausgestattet, umfassend einen geradlinigen, horizontalen Abschnitt und einem geradlinig und linear ansteigenden Abschnitt. Das veränderliche Höhenprofil ist aus Fig. 8A ersichtlich. Ein alternatives, variables Höhenprofil mit einem ansteigendem und einem absteigenden Abschnitt ist in Fig. 9 dargestellt. Das veränderliche Höhenprofil hat zur Folge, dass, wenn im Zuge des Abziehens von Klarwasser W" über die Abzugsvorrichtung 18, der Pegelstand 3R im zweiten Fluidbehälter und insb. im zweiten Teil des zweiten Fluidbehälters R-2 sinkt, der Ort des Überlaufens des ungeklärten Wassers W' sich in Abhängigkeit des sich verändernden Pegelstandes 3R ändert. Im dargestellten Ausführungsbeispiel der Fig. 8A und B führt dies zu einer fächerartigen Zuführung (der Zulauf wird bspw. zunächst senkrecht zur Überlaufkante erfolgen, mit zunehmendem Pegelstand jedoch zunehmend nach unten ausgelenkt, vgl. die Richtungspfeile P1 bis P3 zu drei unterschiedlichen Zeitpunkten in Fig. 8B) und Ausbreitung des ungeklärten Wassers W' in den zweiten Teil R-2 des Reaktors R, wobei die Ausbreitungsgeschwindigkeit ungeklärten Wassers W' in Richtung der Abzugsvorrichtung 18 wesentlich geringer ist als im Ausführungsbeispiel der Fig. 7A bis 7C, vgl. die entsprechenden, Ausbreitungswolken' in den Fig. 7B und 8B.

Im Ergebnis wird die durchschnittliche Reisedauer von Wasser, ab dem Zeitpunkt, an dem es in ungeklärtem Zustand über die Überlaufkante 17 in den zweiten Teil R-2 eintritt, bis zum Erreichen der Abzugsvorrichtung 3, wesentlich verlängert, so dass aufgrund der verlängerten Reisedauer Umsetzungsprozesse ablaufen und sich auch deutlich mehr Schwebstoffe am Boden absetzen können und das Wasser auf diese Weise gereinigt wird. Die für die Reinigung notwendige Sedimentation tritt also kontinuierlich über die Weglänge zwischen dem Eintritt an der Überlaufkante 17 und der Abzugsvorrichtung 18 auf. Auf eine zeitlich abgegrenzte, im gesamten Reaktor R stattfindende Sedimentationsphase kann daher verzichtet werden.

Das im Zusammenhang mit der in den Fig. 8A und 8B gezeigten Wasserbehandlungsvorrichtung vorzugsweise eingesetzte Verfahren kann zusammenfassend beschrieben werden als Zyklus mit einer kontinuierlichen Wasserzuführung (ununterbrochene Beschickungs- oder Befüllungsphase), einer kontinuierlichen Gaszuführung (kontinuierliche Gaszuführungsphase) in die Durchmischungsvorrichtung im Selektor S zur Durchmischung des zugeführten Wassers mit Belebtschlamm sowie gleichzeitig kontinuierlicher Gaszuführung im Reaktor R zur Sauerstoffeinbringung, einer kontinuierlichen Sedimentationsphase im zweiten Teil des Reaktors R sowie einer zeitlich begrenzten Abzugsphase am Ende des Zyklus, in der Wasser aus dem zweiten Teil des Reaktors R abgezogen wird, und der Pegelstand im ersten und zweiten Teil des Reaktors dadurch sinkt. Nach Ende der Abzugsphase beginnt ein neuer Zyklus, in dem der Pegelstand im Reaktor R aufgrund der kontinuierlichen Wasserzuführung wieder steigt.

Figuren 8 A und 8 B zeigen, dass bei sinkendem Wasserspiegel dort die Geschwindigkeit dort, wo die Wassertiefe über der geneigten Überlaufkante höher ist, geringer ist und dort wo die Wassertiefe geringer ist, auch eine höhere Geschwindigkeit auftritt. Durch den sinkenden Wasserspiegel ändern sich die Geschwindigkeiten laufend und es wird überall die Geschwindigkeit zunächst zunehmen, wo der Wasserspiegel aber unter der Überlaufkante liegt, wird die Geschwindigkeit Null. Dadurch ergibt sich eine Verlagerung der Strömung in das Reaktorbecken hinein im Sinne einer Ablenkung des Massenstroms in jene Richtung, in welche die geringere Eintrittsgeschwindigkeit herrscht. Im Gegensatz zu einer geraden Kante trifft das immer weiter abgelenkte zuströmende Massenpaket auf ruhende Massenpakete, welche erst in Bewegung gebracht werden müssen, wodurch Energie aufzuwenden ist, bzw. ebensolche Energie, die das überströmende Wasser inne hat, vernichtet wird, was hier beabsichtigt ist, denn die zuströmenden Wasserpakete verteilen sich im Becken und erreichen idealerweise deutlich später das Ende des Beckens mit der Abzugsvorrichtung als bei einer geraden Überlaufkante. Bei einer geraden Überlaufkante ist die Richtung der Zuströmung von R1 nach R2 immer identisch und das zuströmende Wasserpaket überträgt die Energie auf ein bereits in Bewegung befindliches, davorliegendes Wasserpaket, mit anderen Worten schiebt das bereits eingetretene Paket immer weiter vor sich her und es erreicht das hintere Ende des Beckens R2 mit der Abzugsvorrichtung 18 sehr viel früher.

Die kontinuierliche Beschickung-, Belüftungs- und Sedimentationsphase erlauben es, eine Wasserbehandlungsvorrichtung mit einer einzigen Linie auszuführen. Auf parallele Linien mit mehreren Selektoren und Reaktoren, die abwechselnd mit Wasser beschickt werden, so dass in einer Linie eine zeitlich abgegrenzte Sedimentationsphase durchgeführt werden kann, ohne den Wasserzulauf zu unterbrechen, kann verzichtet werden. Dies ermöglicht insb. kleinere Anlagengrößen.

Für alle vorgemachten Ausführungen gilt, dass es sich bei den als Fluidbehältern bezeichneten Gefäßen nicht um Fluidbehälter im labortechnischen Sinne, also insbesondere nicht um transportable (Hand-)Gefäße handelt, sondern um fest installierte Becken mit einer Fassungskapazität von mehreren Kubikmetern, vorzugsweise in einem Bereich von 15m³ aufwärts, jedoch kleiner als 30.000m³. Die Becken sind im Regelfall dabei im Freien angeordnet und nicht überdacht. Die Zyklusdauer für die Wasserbehandlung bewegt sich typischerweise in einer Größenordnung von Stunden und ist kürzer als ein Tag.

### Bezugszeichenliste

- D9: Öffnungsquerschnitt Einlauföffnung
- D10: Öffnungsquerschnitt Auslauföffnung

- H5R: vertikaler Abstand Gaseinlass
- H5S: vertikaler Abstand Gaseinlass
- Hmax: Maximaler Füllstand
- Hmin: minimaler Füllstand
- H9: Höhe des Einlaufs
- H10: Höhe des Auslaufs

- a: Fluidsäule (,hydrostatische Höhe')
- b: Fluidsäule (,hydrostatische Höhe')
- c: Fluidsäule (,hydrostatische Höhe')

- K: Kaptor
- L: Längserstreckung
- M: Mantelfläche
- R: Reaktor; zweiter Fluidbehälter
- R-1: erster Teil; Kaptor
- R-2: zweiter Teil
- S: Selektor; erster Fluidbehälter
- W: Wasser
- X: Längsachse

- 1: Wasserbehandlungsvorrichtung
- 2: erste Überlaufkante
- 2': erste Trennwand
- 3R: Füllstand
- 3S: Füllstand
- 4S: Gaszuführung
- 4R: Gaszuführung
- 5S: Gasauslass
- 5R: Gasauslass
- 5K: Gasauslass
- 6: Gasquelle
- 7: Durchmischungsvorrichtung
- 7A: röhrenförmiger Abschnitt
- 7B: trichterförmiger Abschnitt
- 8: Zuführleitung (Gas)
- 9: Einlauf
- 10: Auslauf
- 11R: Boden
- 11S: Boden
- 12: Sedimente
- 13: Fluidleiteinrichtung
- 14: Befestigungsvorrichtung
- 14a: Standwinkel
- 14b: Spannseil
- 15: Strömungskanal
- 16: zweite Trennwand
- 17: zweite Überlaufkante
- 18: Abzugsvorrichtung

## Patentansprüche

1. Wasserbehandlungsvorrichtung (1) zur Behandlung von Wasser (W) umfassend einen ersten und einen zweiten durch eine erste Trennwand (2) getrennte Fluidbehälter (R; S), die erste Trennwand (2') an Ihrem oberen Ende eine Überlaufkante (2) ausbildet, so der erste und der zweite Fluidbehälter (R bzw. S) über die Überlaufkante (2) fluidisch miteinander verbunden sind und Wasser (W) von dem ersten Fluidbehälter (S) in den zweiten Fluidbehälter (R) überlaufen kann, wenn ein vorgegebener Füllstand in dem ersten Fluidbehälter (S) überschritten wird,
der zweite Fluidbehälter (R) einen schwankenden Füllstand (R3) aufweist, und
der erste und zweite Fluidbehälter (R bzw. S) jeweils eine in den Fluidbehälter (R; S) hineinragende Gaszuführung (4R; 4S) mit Gasauslässen (R5; SS) zur Zuführung eines Gases, insb. Luftsauerstoff zur aeroben Aktivierung des Wassers (W), aufweisen, wobei die Gasauslässe (5R; 5S) jeweils einen vertikalen Abstand (R5S; H5S) zu einem jeweiligen Boden (11S; 11R) der Fluidbehälter (R; S) aufweisen,
wobei die Gaszuführungen (4R; 4S) mit einer gemeinsamen Gasquelle (6) verbunden sind,
**dadurch gekennzeichnet, dass** in dem ersten Fluidbehälter (S) eine nach dem Prinzip einer Mammutpumpe arbeitende Durchmischungsvorrichtung (7) umfassend einen an einem ersten, unteren Ende der Durchmischungsvorrichtung (7) gelegenen Einlauf (9) sowie einen an einem gegenüberliegenden, oberen Ende der Durchmischungsvorrichtung (7) angeordneten Auslauf (10) angeordnet ist,
der Gasauslass (5S) der Gaszuführung (4S) des ersten Fluidbehälters (S) zwischen dem Einlauf (9) und dem Auslauf (10) in die Durchmischungsvorrichtung (7) mündet und
der vertikale Abstand (HSS) des Gaseinlasses (5S) des ersten Fluidbehälters (S) zu dessen Boden (11S) größer ist als der vertikale Abstand (HSR) des Gasauslasses (5R) der Gaszuführung (4R) des zweiten Fluidbehälters (R) zu dessen Boden (11R), so dass bei gleichem Füllstand (3R = 3S) von dem ersten und dem zweiten Fluidbehälter (R; S) der hydrostatische Druck (a) am Gasauslass (5S) des ersten Fluidbehälters (S) geringer ist als der hydrostatische Druck (b) am Gasauslasses (5R) des zweiten Fluidbehälters (R).

2. Vorrichtung (1) nach Anspruch 1, **dadurch gekennzeichnet, dass** ein maximaler Querschnitt der Gaszuführung (5S) des ersten Fluidbehälters (S) um ein bestimmtes Maß, insbesondere um einen Faktor 2, 3 oder 5, kleiner ausgeführt ist als ein maximaler Querschnitt der Gaszuführung (5R) des zweiten Fluidbehälters (R).

3. Vorrichtung (1) nach Anspruch 1 oder 2, **dadurch gekennzeichnet, dass** die Gaszuführungen (4R; 4S) in den ersten bzw. den zweiten Fluidbehälter (S; R) von einer mit der Gasquelle (6) verbundenen Zuführleitung (8) abzweigen und in keiner der Gaszuführungen (4R; 4S) ein aktives Druckregelelement zur Änderung des Verhältnisses der in den ersten bzw. zweiten Fluidbehälter (R; S) einströmenden Gasanteile, z.B. ein Drosselventil, angeordnet ist.

4. Vorrichtung (1) nach einem der Ansprüche 1 bis 3, **dadurch gekennzeichnet, dass** die Durchmischungsvorrichtung (7) vollständig unterhalb des Flüssigkeitsspiegels (3S) des ersten Fluidbehälters (S) angeordnet ist, und der Auslauf (10) der Durchmischungsvorrichtung (7) mindestens 100 cm unterhalb des Flüssigkeitsspiegels (3S) des ersten Fluidbehälters (S) liegt.

5. Vorrichtung (1) nach einem der vorhergehenden Ansprüche, **dadurch gekennzeichnet, dass** die Durchmischungsvorrichtung (7) eine Gesamtlänge (L) aufweist, die 30-80%, vorzugsweise 60-70%, der Gesamthöhe (Hmax (S)) des ersten Fluidbehälters (S) entspricht.

6. Vorrichtung (1) nach einem der vorhergehenden Ansprüche, **dadurch gekennzeichnet, dass** der Einlauf (9) der Durchmischungsvorrichtung (7) in Bodennähe des Bodens (11S) des ersten Fluidbehälters (S), vorzugsweise in einem vertikalen Abstand von 5-50 cm, und der Gasauslass (5R) der Gaszuführung (4R) des zweiten Fluidbehälters (R) in Bodennähe des Bodens (11R) des zweiten Fluidbehälters (R), vorzugsweise in einem vertikalen Abstand von 3-30 cm, angeordnet sind.

7. Vorrichtung (1) nach einem der vorhergehenden Ansprüche, **dadurch gekennzeichnet, dass** die Böden (11S; 11R) von dem ersten und zweiten Fluidbehälter (R; S) im Wesentlichen auf gleicher Höhe angeordnet sind.

8. Vorrichtung (1) nach einem der vorhergehenden Ansprüche, **dadurch gekennzeichnet, dass** die Durchmischungsvorrichtung (7) zweiteilig ausgebildet ist mit einem unteren, trichterförmigen Abschnitt (7B), in welchem der Einlauf (9) befindlich ist, und einem oberen, röhrenförmigen Abschnitt (7A), in welchem der Auslauf (10) befindlich ist,
und der trichterförmige Abschnitt (7B) und der röhrenförmige Abschnitt (7A) vorzugsweise lösbar miteinander verbunden sind.

9. Vorrichtung (1) nach einem der vorhergehenden Ansprüche, **dadurch gekennzeichnet, dass** der zweite Fluidbehälter (R) eine zweite Trennwand (16) aufweist, die den zweiten Fluidbehälter (R) in einen ersten und einen zweiten Teil (R-1; R-2) trennt,
und die zweite Trennwand (16) an ihrem oberen Ende eine zweite Überlaufkante (17) aufweist, so dass der erste und der zweite Teil (R-1; R-2 des zweiten Fluidbehälters (R) fluidisch miteinander verbunden sind und Wasser (W) von dem ersten Teil (R-1) in den zweiten Teil (R-2) fließen kann , wenn ein vorgegebener Füllstand in dem zweiten Fluidbehälter (R) erreicht wird,
und die zweite Überlaufkante (17) zur Vermeidung von Kurzschlussströmen ein variables Höhenprofil, insb. mit einem geneigten Abschnitt, aufweist.

10. Vorrichtung (1) nach Anspruch 9, **dadurch gekennzeichnet, dass** die erste und die zweite Trennwand (2`; 17) vertikal verlaufen, und senkrecht oder unter einem spitzen Winkel zueinander ausgerichtet sind.

11. Verfahren zur zyklischen Behandlung von Wasser (W) in wenigstens einem ersten und einem zweiten durch eine erste Trennwand (2) getrennten Fluidbehältern (R; S) mit einer zeitlich oder örtlich abgegrenzten Befüllungsphase, einer Sedimentationsphase und einer Dekantierungsphase,
wobei dem ersten Fluidbehälter (S) in der Befüllungsphase zu behandelndes Wasser (W) zugeführt wird, welches über eine durch die erste Trennwand (2') ausgebildete Überlaufkante (2) zwischen dem ersten und dem zweiten Fluidbehälter (R; S) in den zweiten Fluidbehälter (R) überläuft,
beide Fluidbehälter (R; S) jeweils eine in die Fluidbehälter (R; S) hineinragende Gaszuführung (4S; 4R) mit Gasauslässen (5S; 5R) zur Zuführung eines Gases, insb. von Luftsauerstoff zur aeroben Aktivierung des Wassers (W), während mindestens der Befüllungsphase sowie optional auch der Sedimentations und/oder Dekantierungsphase aufweisen,
die Gaszuführungen (4S; 4R) aus einer gemeinsamen Gasquelle (6) gespeist werden,
**dadurch gekennzeichnet, dass** die Gaseinbringung in den ersten Fluidbehälter (S) in eine in dem ersten Fluidbehälter (S) eingebrachte nach dem Prinzip einer Mammutpumpe arbeitende Durchmischungsvorrichtung (7) erfolgt, wobei der Gasauslass (SS) der Gaszuführung (4S) des ersten Fluidbehälters (S) sich hydrostatisch gesehen immer auf derselben Höhe oder oberhalb (a <= b) des Gasauslasses (5R) der Gaszuführung (4R) des zweiten Fluidbehälters (R) befindet.

12. Verfahren nach Anspruch 11, **dadurch gekennzeichnet, dass** der erste Fluidbehälter (S) kontinuierlich mit Wasser (W) beschickt wird, so dass über die erste Überlaufkante (2) kontinuierlich Wasser in den zweiten Fluidbehälter (R) strömt, der zweite Fluidbehälter (R) eine Trennwand (16) aufweist, welche den zweiten Fluidbehälter (R) in einen ersten und einen zweiten Teil (R-1; R-2) trennt, die Trennwand (16) eine zweite Überlaufkante (17) aufweist, über die der erste und der zweite Teil (R-1; R-2) fluidisch kommunizieren, so dass Wasser zwischen dem ersten und dem zweiten Teil (R-1; R-2) ausgetauscht werden kann,
in dem zweiten Teil (R-2) eine Abzugsvorrichtung (18) zum Abziehen von oberflächennahem Wasser angeordnet ist und
die zweite Überlaufkante (17) ein variables Höhenprofil mit einer maximalen und einer minimalen Höhe aufweist, so dass
während der Dekantierungsphase, in der Wasser über die Abzugsvorrichtung (18) aus dem zweiten Teil (R-2) des zweiten Fluidbehälters (R) abgezogen wird, und während der die Füllstände (3R) in dem ersten und zweiten Teil (R-1; R-2) des zweiten Fluidbehälters (R) schwanken, wenn die Füllstände sich zwischen der maximalen und der minimalen Höhe der zweiten Überlaufkante (17) befinden, so dass der Ort der Zuströmung des Wassers (W) entlang der zweiten Überlaufkante (17) sich je nach Füllstand ändert.
